# EUROPEAN PATENT APPLICATION

(11) **EP 3 793 310 A1**
(43) Date of publication of application: **17.03.2021**
(21) Application number: 19799524.4
(22) Date of filing: 08.05.2019
(51) Int. Cl.: H04W 74/08, H04W 72/04

(54) **BASE STATION DEVICE, TERMINAL DEVICE, COMMUNICATION METHOD, AND INTEGRATED CIRCUIT**

(30) Priority: 10.05.2018 JP 2018091542
(71) Applicant: Sharp Kabushiki Kaisha, Sakai-shi Osaka 590-8522 (JP); FG Innovation Company Limited, Hong Kong (CN)
(72) Inventor: TAKAHASHI Hiroki, Sakai City, Osaka 590-8522 (JP); YAMADA Shohei, Sakai City, Osaka 590-8522 (JP); HOSHINO Masayuki, Sakai City, Osaka 590-8522 (JP); TSUBOI Hidekazu, Sakai City, Osaka 590-8522 (JP); LIU Liqing, Sakai City, Osaka 590-8522 (JP)
(74) Representative: Müller-Boré & Partner Patentanwälte PartG mbB
(86) International application number: PCT/JP2019/018401
(87) International publication number: WO 2019/216341

(57) **Abstract**

The terminal apparatus receives one or more first blocks including a synchronization signal, receives first information and second information identifying one of the first blocks, and transmits a random access preamble in an available PRACH occasion identified based at least on the first information and the second information. At least one bit sequence of bit sequences indicatable by the second information indicates a PRACH occasion index indicating a physical random access channel occasion available for transmission of the random access preamble among PRACH occasions associated with the first block in an association period identified based on a physical random access channel configuration period indicated by higher layer signaling and the number of one or more first blocks.

## Description

### TECHNICAL FIELD

The present invention relates to a base station apparatus, a terminal apparatus, a communication method, and an integrated circuit.
This application claims priority based on JP 2018-091542 filed on May 10, 2018, the contents of which are incorporated herein by reference.

### BACKGROUND ART

Technical studies and standardization of Long Term Evolution (LTE)-Advanced Pro and New Radio (NR) technology, as a radio access scheme and a radio network technology for fifth generation cellular systems, are currently conducted by the Third Generation Partnership Project (3GPP) (NPL 1).

The fifth generation cellular system requires three anticipated scenarios for services: enhanced Mobile BroadBand (eMBB) which realizes high-speed, high-capacity transmission, Ultra-Reliable and Low Latency Communication (URLLC) which realizes low-latency, high-reliability communication, and massive Machine Type Communication (mMTC) that allows a large number of machine type devices to be connected, such as Internet of Things (IoT).

### CITATION LIST

### NON PATENT LITERATURE

NPL 1: RP-161214, NTT DOCOMO Inc., "Revision of SI: Study on New Radio Access Technology", June 2016

### SUMMARY OF INVENTION

### TECHNICAL PROBLEM

An object of the present invention is to provide a terminal apparatus, a base station apparatus, a communication method, and an integrated circuit which allow efficient communication in the above-mentioned radio communication systems.

### SOLUTION TO PROBLEM

(1) To accomplish the object described above, aspects of the present invention are contrived to provide the following measures. Specifically, a terminal apparatus in an aspect of the present invention includes a receiver configured to receive one or more first blocks including a synchronization signal and receive first index information and second index information and a transmitter configured to transmit a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(2) A base station apparatus in an aspect of the present invention includes a transmitter configured to transmit one or more first blocks including a synchronization signal and transmit first index information and second index information and a receiver configured to monitor a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(3) A communication method in an aspect of the present invention is a communication method for a terminal apparatus, the communication method including receiving one or more first blocks including a synchronization signal and receiving first index information and second index information and transmitting a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(4) A communication method in an aspect of the present invention is a communication method for a base station apparatus, the communication method including transmitting one or more first blocks including a synchronization signal and transmitting first index information and second index information and monitoring a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(5) An integrated circuit in an aspect of the present invention is an integrated circuit mounted on a terminal apparatus and causing the terminal apparatus to perform receiving one or more first blocks including a synchronization signal and receiving first index information and second index information and transmitting a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(6) An integrated circuit in an aspect of the present invention is an integrated circuit mounted on a base station apparatus and causing the base station apparatus to perform transmitting one or more first blocks including a synchronization signal and transmitting first index information and second index information and monitoring a random access preamble by using a physical random access channel occasion that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.

### ADVANTAGEOUS EFFECTS OF INVENTION

According to an aspect of the present invention, a base station apparatus and a terminal apparatus can efficiently communicate with each other.

### BRIEF DESCRIPTION OF DRAWINGS

FIG. 1 is a diagram illustrating a concept of a radio communication system according to an embodiment of the present invention.
FIG. 2 is a diagram illustrating an example of an SS/PBCH block and an SS burst set according to the embodiment of the present invention.
FIG. 3 is a diagram illustrating an example of schematic configurations of uplink and downlink slots according to the embodiment of the present invention.
FIG. 4 is a diagram illustrating a relationship among a subframe, a slot, and a mini-slot in a time domain according to the embodiment of the present invention.
FIG. 5 is a diagram illustrating an example of the slot or the subframe according to the embodiment of the present invention.
FIG. 6 is a diagram illustrating an example of beamforming in the embodiment of the present invention.
FIG. 7 is a diagram illustrating an example of allocation of an SSB index for a PRACH occasion according to the embodiment of the present invention.
FIG. 8 is a conceptual diagram of transmission and/or reception of multiple messages between a terminal apparatus 1 and a base station apparatus 3 in a random access procedure according to the embodiment of the present invention.
FIG. 9 is a diagram illustrating an example of a table of a mask index according to the embodiment of the present invention.
FIG. 10 is a flowchart illustrating an example of transmission processing of a non-contention based random access preamble of the terminal apparatus 1 according to the present embodiment.
FIG. 11 is a flowchart illustrating an example of reception processing of a non-contention based random access preamble of the base station apparatus 3 according to the present embodiment.
FIG. 12 is a diagram illustrating an example of allocation of a preamble index according to the embodiment of the present invention.
FIG. 13 is a schematic block diagram illustrating the configuration of the terminal apparatus 1 according to the embodiment of the present invention.
FIG. 14 is a schematic block diagram illustrating the configuration of the base station apparatus 3 according to the embodiment of the present invention.

### DESCRIPTION OF EMBODIMENTS

Embodiments of the present invention will be described below.

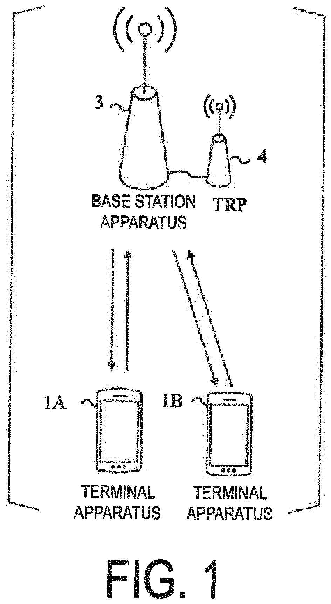

FIG. 1 is a conceptual diagram of a radio communication system according to the present embodiment. In FIG. 1, the radio communication system includes a terminal apparatus 1A, a terminal apparatus 1B, and a base station apparatus 3. Hereinafter, the terminal apparatus 1A and the terminal apparatus 1B are also referred to as a terminal apparatus 1.

The terminal apparatus 1 is also called a user terminal, a mobile station device, a communication terminal, a mobile device, a terminal, User Equipment (UE), and a Mobile Station (MS). The base station apparatus 3 is also referred to as a radio base station apparatus, a base station, a radio base station, a fixed station, a NodeB (NB), an evolved NodeB (eNB), a Base Transceiver Station (BTS), a Base Station (BS), an NR NodeB (NR NB), NNB, a Transmission and Reception Point (TRP), or gNB. The base station apparatus 3 may include a core network apparatus. Furthermore, the base station apparatus 3 may include one or more transmission reception points 4. At least some of the functions/processing of the base station apparatus 3 described below may be functions/processing at each of the transmission reception points 4 included in the base station apparatus 3. The base station apparatus 3 may have a communicable range (communication area), controlled by the base station apparatus 3, that includes one or more cells to serve the terminal apparatus 1. Furthermore, the base station apparatus 3 may have a communicable range (communication area), controlled by one or more transmission reception points 4, that includes one or more cells to serve the terminal apparatus 1. Furthermore, one cell may be divided into multiple beamed areas, and the terminal apparatus 1 may be served in each of the beamed areas. Here, a beamed area may be identified based on a beam index used for beamforming or a precoding index.

A radio communication link from the base station apparatus 3 to the terminal apparatus 1 is referred to as a downlink. A radio communication link from the terminal apparatus 1 to the base station apparatus 3 is referred to as an uplink.

In FIG. 1, in a radio communication between the terminal apparatus 1 and the base station apparatus 3, Orthogonal Frequency Division Multiplexing (OFDM) including a Cyclic Prefix (CP), Single-Carrier Frequency Division Multiplexing (SC-FDM), Discrete Fourier Transform Spread OFDM (DFT-S-OFDM), or Multi-Carrier Code Division Multiplexing (MC-CDM) may be used.

Furthermore, in FIG. 1, in the radio communication between the terminal apparatus 1 and the base station apparatus 3, Universal-Filtered Multi-Carrier (UFMC), Filtered OFDM (F-OFDM), Windowed OFDM, or Filter-Bank Multi-Carrier (FBMC) may be used.

Note that the present embodiment will be described by using OFDM symbol with the assumption that a transmission scheme is OFDM, and use of any other transmission scheme is also included in an aspect of the present invention.

Furthermore, in FIG. 1, in the radio communication between the terminal apparatus 1 and the base station apparatus 3, the CP may not be used, or the above-described transmission scheme with zero padding may be used instead of the CP. Moreover, the CP or zero padding may be added both forward and backward.

An aspect of the present embodiment may be operated in carrier aggregation or dual connectivity with the Radio Access Technologies (RAT) such as LTE and LTE-A/LTE-A Pro. In this case, the aspect may be used for some or all of the cells or cell groups, or the carriers or carrier groups (e.g., Primary Cells (PCells), Secondary Cells (SCells), Primary Secondary Cells (PSCells), Master Cell Groups (MCGs), or Secondary Cell Groups (SCGs)). Moreover, the aspect may be independently operated and used in a stand-alone manner. In the dual connectivity operation, a Special Cell (SpCell) is referred to as the PCell of the MCG or the PSCell of the SCG depending on whether a Medium Access Control (MAC) entity is associated with the MCG or the SCG. In an operation other than the dual connectivity operation, a Special Cell (SpCell) is referred to as the PCell. The Special Cell (SpCell) supports PUCCH transmission and a contention based random access.

In the present embodiment, one or more serving cells may be configured for the terminal apparatus 1. The multiple configured serving cells may include one primary cell and one or more secondary cells. The primary cell may be a serving cell on which an initial connection establishment procedure has been performed, a serving cell on which a connection re-establishment procedure has been initiated, or a cell indicated as a primary cell during a handover procedure. One or more secondary cells may be configured at a point of time when or after a Radio Resource Control (RRC) connection is established. Note that the multiple configured serving cells may include one primary secondary cell. The primary secondary cell may be a secondary cell capable of transmitting control information on the uplink among one or more secondary cells configured for the terminal apparatus 1. Furthermore, two types of subset of serving cells, which are a master cell group and a secondary cell group, may be configured for the terminal apparatus 1. The master cell group may include one primary cell and zero or more secondary cells. The secondary cell group may include one primary secondary cell and zero or more secondary cells.

Time Division Duplex (TDD) and/or Frequency Division Duplex (FDD) may be applied to the radio communication system according to the present embodiment. The Time Division Duplex (TDD) scheme or the Frequency Division Duplex (FDD) scheme may be applied to all of the multiple cells. Cells to which the TDD scheme is applied and cells to which the FDD scheme is applied may be aggregated.

A carrier corresponding to a serving cell in the downlink is referred to as a downlink component carrier (or a downlink carrier). A carrier corresponding to a serving cell in the uplink is referred to as an uplink component carrier (or an uplink carrier). A carrier corresponding to a serving cell in the sidelink is referred to as a sidelink component carrier (or a sidelink carrier). The downlink component carrier, the uplink component carrier, and/or the sidelink component carrier are collectively referred to as a component carrier (or a carrier).

Physical channels and physical signals according to the present embodiment will be described.

In FIG. 1, the following physical channels are used for the radio communication between the terminal apparatus 1 and the base station apparatus 3.
- Physical Broadcast CHannel (PBCH)
- Physical Downlink Control CHannel (PDCCH)
- Physical Downlink Shared CHannel (PDSCH)
- Physical Uplink Control CHannel (PUCCH)
- Physical Uplink Shared CHannel (PUSCH)
- Physical Random Access CHannel (PRACH)

The PBCH is used to broadcast essential information block ((Master Information Block (MIB), Essential Information Block (EIB), and Broadcast Channel (BCH)) which includes essential system information needed by the terminal apparatus 1.

The PBCH may be used to broadcast a time index within the period of the block (also referred to as an SS/PBCH block) of the synchronization signal. Here, the time index is information indicating the indices of the synchronization signal and the PBCH within the cell. For example, in a case that the SS/PBCH block is transmitted using the assumption of three transmission beams (Quasi Co-Location (QCL) for transmission filter configuration and reception spatial parameters), the order of time within a predetermined period or within a configured period may be indicated. Furthermore, the terminal apparatus may recognize a difference in time index as a difference in the transmission beam.

The PDCCH is used to transmit (or deliver) Downlink Control Information (DCI) in downlink radio communication (radio communication from the base station apparatus 3 to the terminal apparatus 1). Here, one or more pieces of DCI (which may be referred to as DCI formats) are defined for transmission of the downlink control information. In other words, a field for the downlink control information is defined as DCI and is mapped to information bits.

For example, the following DCI formats may be defined.
- DCI format 0_0
- DCI format 0_1
- DCI format 1_0
- DCI format 1_1
- DCI format 2_0
- DCI format 2_1
- DCI format 2_2
- DCI format 2_3

DCI format 0_0 may include information indicating PUSCH scheduling information (frequency domain resource allocation and time domain resource allocation).

DCI format 0_1 may include information indicating PUSCH scheduling information (frequency domain resource allocation and time domain resource allocation), information indicating a BandWidth Part (BWP), a Channel State Information (CSI) request, a Sounding Reference Signal (SRS) request, and information on an antenna port.

DCI format 1_0 may include information indicating PDSCH scheduling information (frequency domain resource allocation and time domain resource allocation).

DCI format 1_1 may include information indicating PDSCH scheduling information (frequency domain resource allocation and time domain resource allocation), information indicating a band width part (BWP), a Transmission Configuration Indication (TCI), and information on the antenna port.

DCI format 2_0 is used to notify the slot format of one or more slots. In the slot format, each OFDM symbol in the slot is defined so as to be classified to any of the downlink, the flexible, or the uplink. For example, in a case that slot format is 28, DDDDDDDDDDDDFU is applied to OFDM symbols of 14 symbols in the slot for which the slot format 28 is indicated. Here, D is a downlink symbol, F is a flexible symbol, and U is an uplink symbol. Note that the slot will be described below.

DCI format 2_1 is used to notify the terminal apparatus 1 of a physical resource block and the OFDM symbol which may be assumed not to be transmitted. Note that this information may be referred to as a preemption indication (intermittent transmission indication).

DCI format 2_2 is used for transmission of the PUSCH and a Transmit Power Control (TPC) command for the PUSCH.

DCI format 2_3 is used to transmit a group of TPC commands for sounding reference signal (SRS) transmission by one or more terminal apparatuses 1. The SRS request may be transmitted with the TPC command. The SRS request and the TPC command may be defined in DCI format 2_3 for the PUSCH and the uplink without PUCCH or the uplink in which the SRS transmit power control is not associated with the transmit power control for the PUSCH.

The DCI for the downlink is also referred to as downlink grant or downlink assignment. Here, the DCI for the uplink is also referred to as uplink grant or Uplink assignment.

The PUCCH is used to transmit Uplink Control Information (UCI) in uplink radio communication (radio communication from the terminal apparatus 1 to the base station apparatus 3). Here, the uplink control information may include Channel State Information (CSI) used to indicate a downlink channel state. The uplink control information may include Scheduling Request (SR) used to request an UL-SCH resource. The uplink control information may include a Hybrid Automatic Repeat request ACKnowledgement (HARQ-ACK). The HARQ-ACK may indicate a HARQ-ACK for downlink data (Transport block, Medium Access Control Protocol Data Unit (MAC PDU), or Downlink-Shared Channel (DL-SCH)).

The PDSCH is used to transmit downlink data (Downlink Shared CHannel (DL-SCH)) from Medium Access Control (MAC) layer. Furthermore, in a case of the downlink, the PDSCH is used to transmit System Information (SI), a Random Access Response (RAR), and the like.

The PUSCH may be used for transmission of uplink data (Uplink Shared CHannel (UL-SCH) or the HARQ-ACK and/or the CSI together with the uplink data from the MAC layer. Furthermore, the PSCH may be used to transmit the CSI only or the HARQ-ACK and CSI only. In other words, the PSCH may be used to transmit the UCI only.

Here, the base station apparatus 3 and the terminal apparatus 1 exchange (transmit and/or receive) signals with each other in higher layers. For example, the base station apparatus 3 and the terminal apparatus 1 may transmit and/or receive Radio Resource Control (RRC) signaling (also referred to as a Radio Resource Control (RRC) message or Radio Resource Control (RRC) information) in an RRC layer. The base station apparatus 3 and the terminal apparatus 1 may transmit and/or receive a Medium Access Control (MAC) control element in a Medium Access Control (MAC) layer. Here, the RRC signaling and/or the MAC control element is also referred to as higher layer signaling. Since the higher layer described herein refers to a higher layer with respect to a physical layer, the higher layer may include one or more of a MAC layer, an RRC layer, an RLC layer, a PDCP layer, a Non Access Stratum (NAS) layer, and the like. For example, in the MAC layer processing, the higher layer may include one or more of an RRC layer, an RLC layer, a PDCP layer, a NAS layer, and the like.

The PDSCH or the PUSCH may be used to transmit the RRC signaling and the MAC control element. Here, the RRC signaling transmitted from the base station apparatus 3 may be signaling common to the multiple terminal apparatuses 1 in the cell in PDSCH. The RRC signaling transmitted from the base station apparatus 3 may be signaling dedicated to a certain terminal apparatus 1 (also referred to as dedicated signaling). In other words, terminal apparatus-specific (UE-specific) information may be transmitted through signaling dedicated to the certain terminal apparatus 1. The PUSCH may be used to transmit a UE Capability in the uplink.

In FIG. 1, the following downlink physical signals are used for downlink radio communication. Here, the downlink physical signals are not used to transmit information output from the higher layers but are used by the physical layer.
- Synchronization signal (SS)
- Reference Signal (RS)

The synchronization signal may include a Primary Synchronization Signal (PSS) and a Secondary Synchronization Signal (SSS). A cell ID may be detected by using the PSS and SSS.

The synchronization signal is used for the terminal apparatus 1 to establish synchronization in a frequency domain and a time domain in the downlink. Here, the synchronization signal may be used for the terminal apparatus 1 to select precoding or a beam in precoding or beamforming performed by the base station apparatus 3. Note that the beam may be referred to as a transmit or receive filter configuration, or a spatial domain transmit filter or a spatial domain receive filter.

A reference signal is used for the terminal apparatus 1 to perform channel compensation on a physical channel. Here, the reference signal is used for the terminal apparatus 1 to calculate the downlink CSI. Furthermore, the reference signal may be used for a numerology such as a radio parameter or subcarrier spacing, or used for fine synchronization that allows FFT window synchronization to be achieved.

According to the present embodiment, at least one of the following downlink reference signals are used.
- Demodulation Reference Signal (DMRS)
- Channel State Information Reference Signal (CSI-RS)
- Phrase Tracking Reference Signal (PTRS)
- Tracking Reference Signal (TRS)

The DMRS is used to demodulate a modulated signal. Note that two types of reference signals may be defined as the DMRS: a reference signal for demodulating the PBCH and a reference signal for demodulating the PDSCH or that both reference signals may be referred to as the DMRS. The CSI-RS is used for measurement of Channel State Information (CSI) and beam management, and the method for transmitting a periodic, semi-persistent, or aperiodic CSI reference signal is applied. As the CSI-RS, a Non-Zero Power (NZP) CSI-RS and a Zero Power (ZP) CSI-RS in which the transmit power (or the receive power) is zero may be defined. Here, the ZP CSI-RS may be defined as a CSI-RS resource in which the transmit power is zero or not transmitted. The PTRS is used to track a phase in the time axis to ensure a frequency offset due to phase noise. The TRS is used to ensure Doppler shift during high-speed travel. Note that the TRS may be used as one configuration of the CSI-RS. For example, a radio resource may be configured with one port of the CSI-RS as the TRS.

In the present embodiment, one or more of the following uplink reference signals are used.
- Demodulation Reference Signal (DMRS)
- Phrase Tracking Reference Signal (PTRS)
- Sounding Reference Signal (SRS)

The DMRS is used to demodulate a modulated signal. Note that two types of reference signals may be defined as the DMRS: a reference signal for demodulating the PUCCH and a reference signal for demodulating the PUSCH or that both reference signals may be referred to as the DMRS. The SRS is used for measurement of uplink channel state information (CSI), channel sounding, and beam management. The PTRS is used to track the phase in the time axis to ensure the frequency offset due to the phase noise.

The downlink physical channels and/or the downlink physical signals are collectively referred to as a downlink signal. The uplink physical channels and/or the uplink physical signals are collectively referred to as an uplink signal. The downlink physical channels and/or the uplink physical channels are collectively referred to as a physical channel. The downlink physical signals and/or the uplink physical signals are collectively referred to as a physical signal.

The BCH, the UL-SCH, and the DL-SCH are transport channels. A channel used in the Medium Access Control (MAC) layer is referred to as a transport channel. A unit of the transport channel used in the MAC layer is also referred to as a Transport Block (TB) and/or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and coding processing is performed for each codeword.

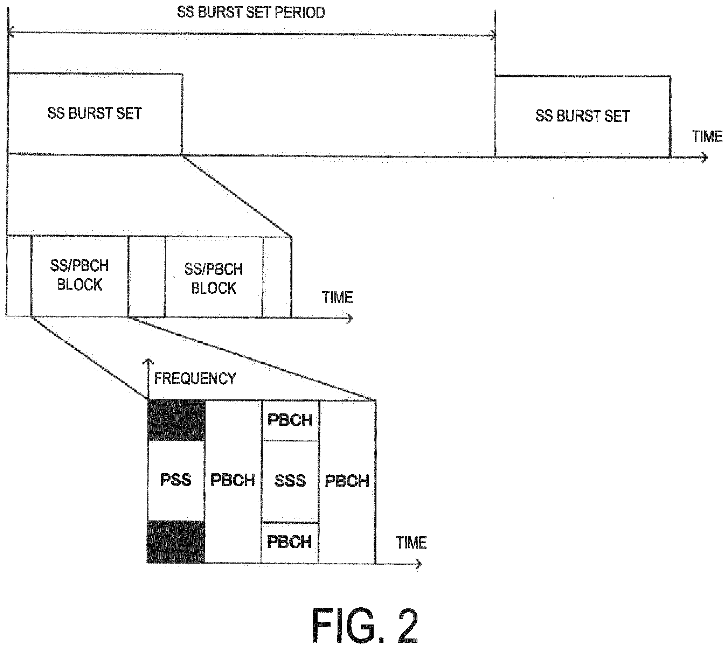

FIG. 2 is a diagram illustrating an example of the SS/PBCH block (also referred to as a synchronization signal block, an SS block, and an SSB) and an SS burst set (also referred to as a synchronization signal burst set) according to the present embodiment. FIG. 2 illustrates the example where two SS/PBCH blocks are included in the periodically-transmitted SS burst set, and the SS/PBCH block includes 4 OFDM symbols.

The SS/PBCH block is a unit block including at least the synchronization signal (PSS, SSS) and/or the PBCH. Transmission of the signal/channel included in the SS/PBCH block is expressed as transmission of the SS/PBCH block. In a case that the base station apparatus 3 transmits the synchronization signal and/or the PBCH using one or more SS/PBCH blocks in the SS burst set, a downlink transmission beam independent for each SS/PBCH block may be used.

In FIG. 2, the PSS, the SSS, and the PBCH are time/frequency multiplexed in one SS/PBCH block. Note that the order of multiplexing the PSS, the SSS, and/or the PBCH in the time domain may be different from that in the example illustrated in FIG. 2.

The SS burst set may be transmitted periodically. For example, a period used for initial access and a period configured for a connected (Connected or RRC_Connected) terminal apparatus may be defined. Furthermore, the period configured for the connected (Connected or RRC_Connected) terminal apparatus may be configured in the RRC layer. Additionally, the period configured for the connected (Connected or RRC_Connected) terminal may be a period of a radio resource in the time domain during which transmission is potentially to be performed, and in practice, whether the transmission is to be performed during the period may be determined by the base station apparatus 3. Furthermore, the period used for the initial access may be predefined in specifications or the like.

The SS burst set may be determined based on a System Frame Number (SFN). Furthermore, a starting position (boundary) of the SS burst set may be determined based on the SFN and the period.

The SSB index (also may be referred to as an SSB/PBCH block index) may be allocated to the SS/PBCH block depending on the temporal position in the SS burst set. The terminal apparatus 1 calculates the SSB index based on the information of the PBCH and/or the information of the reference signal included in the detected SS/PBCH block.

The same SSB index is allocated to the SS/PBCH blocks with the same relative time in each SS burst set in the multiple SS burst sets. The SS/PBCH blocks with the same relative time in each SS burst set in the multiple SS burst sets may be assumed to be the QCL (or the same downlink transmission beam is applied). In addition, the antenna ports in the SS/PBCH blocks with the same relative time in each SS burst set in the multiple SS burst sets may be assumed to be QCL with respect to the average delay, the Doppler shift, and the spatial correlation.

Within the period of a certain SS burst set, the SS/PBCH blocks to which the same SSB index has been allocated may be assumed to be QCL with respect to the average delay, the average gain, the Doppler spread, the Doppler shift, and the spatial correlation. A configuration corresponding to one or more SS/PBCH blocks (or may be the reference signal), which is QCL, may be referred to as a QCL configuration.

The number of SS/PBCH blocks (may be referred to as the number of SS blocks or the SSB number) may be defined as, for example, the number (block number) of SS/PBCH blocks in the SS burst, the SS burst set, or the period of the SS/PBCH block. Moreover, the number of SS/PBCH blocks may indicate the number of beam groups for cell selection in the SS burst, the SS burst set, or the period of the SS/PBCH block. Here, the beam group may be defined as the number of different SS/PBCH blocks or the number of different beams included in the SS burst, the SS burst set, or the period of the SS/PBCH block.

Hereinafter, the reference signal described in the present embodiment includes a downlink reference signal, a synchronization signal, an SS/PBCH block, a downlink DM-RS, a CSI-RS, an uplink reference signal, an SRS, and/or an uplink DM-RS. For example, the downlink reference signal, the synchronization signal, and/or the SS/PBCH block may be referred to as a reference signal. The reference signal used in the downlink includes a downlink reference signal, a synchronization signal, an SS/PBCH block, a downlink DM-RS, a CSI-RS, and the like. The reference signal used in the uplink includes an uplink reference signal, an SRS, and/or an uplink DM-RS.

The reference signal may also be used for Radio Resource Measurement (RRM). The reference signal may also be used for beam management.

Beam management may be a procedure of the base station apparatus 3 and/or the terminal apparatus 1 for matching directivity of an analog and/or digital beam in a transmission apparatus (the base station apparatus 3 in the downlink and the terminal apparatus 1 in the uplink) with directivity of an analog and/or digital beam in a reception apparatus (the terminal apparatus 1 in the downlink and the base station apparatus 3 in the uplink) to acquire a beam gain.

Note that the following procedure may be included as a procedure for constituting, configuring, or establishing a beam pair link.
- Beam selection
- Beam refinement
- Beam recovery

For example, the beam selection may be a procedure for selecting a beam in communication between the base station apparatus 3 and the terminal apparatus 1. Furthermore, the beam refinement may be a procedure for selecting a beam having a higher gain or changing a beam to an optimum beam between the base station apparatus 3 and the terminal apparatus 1 according to the movement of the terminal apparatus 1. The beam recovery may be a procedure for re-selecting the beam in a case that the quality of a communication link is degraded due to blockage caused by a blocking object, a passing human being, or the like in communication between the base station apparatus 3 and the terminal apparatus 1.

Beam management may include beam selection and/or beam refinement. Beam recovery may include the following procedures.
- Detection of beam failure
- Discovery of new beam
- Transmission of beam recovery request
- Monitoring of response to beam recovery request

For example, a Reference Signal Received Power (RSRP) of the SSS included in the CSI-RS or the SS/PBCH block may be used in selection of the transmission beam of the base station apparatus 3 in the terminal apparatus 1, or the CSI may be used. A CSI-RS Resource Index (CRI) may be used as a report to the base station apparatus 3, or an index indicated in the sequence of the PBCH and/or the demodulation reference signal (DMRS) used for demodulation of the PBCH included in the SS/PBCH block may be used.

The base station apparatus 3 indicates the time index of the CRI or the SS/PBCH in an indication of the beam to the terminal apparatus 1, and the terminal apparatus 1 receives the indicated CRI or SS/PBCH time index. At this time, the terminal apparatus 1 may configure and receive the spatial filter based on the indicated time index of the CRI or the SS/PBCH. The terminal apparatus 1 may receive the assumption of the Quasi Co-Location (QCL). A certain signal (an antenna port, a synchronization signal, a reference signal, or the like) which is "QCL" with respect to another signal (an antenna port, a synchronization signal, a reference signal, or the like) or "use of the QCL assumption" can be interpreted as an association of the certain signal with another signal.

In a case that a Long Term Property of a channel on which one symbol in one antenna port is carried may be estimated from a channel on which one symbol in the other antenna port is carried, the two antenna ports are said to be QCL. The long term property of the channel includes at least one of a delay spread, a Doppler spread, a Doppler shift, an average gain, or an average delay. For example, in a case that an antenna port 1 and an antenna port 2 are QCL with respect to the average delay, this means that a reception timing for the antenna port 2 may be estimated from a reception timing for the antenna port 1.

The QCL may also be expanded to beam management. For this purpose, spatially expanded QCL may be newly defined. For example, the Long term property of a channel in spatial domain QCL assumption may be an Angle of Arrival (AoA), a Zenith angle of Arrival (ZoA), or the like and/or an angle spread, for example, Angle Spread of Arrival (ASA) or a Zenith angle Spread of Arrival (ZSA), a transmission angle (AoD, ZoD, or the like) or an angle spread of the transmission angle, for example, an Angle Spread of Departure (ASD) or a Zenith angle Spread of Departure (ZSD), or Spatial Correlation, or a reception spatial parameter in a radio link or channel.

For example, in a case that the antenna port 1 and the antenna port 2 are assumed to be QCL with respect to the reception spatial parameter, it means that a reception beam that receives a signal from the antenna port 2 may be inferred from a reception beam (receive spatial filter) that receives a signal from the antenna port 1.

A combination of the long term properties which may be considered to be QCL may be defined as a QCL type. For example, the following types may be defined.
- Type A: Doppler shift, Doppler spread, Average delay, Delay spread
- Type B: Doppler shift, Doppler spread
- Type C: Average delay, Doppler shift
- Type D: Reception spatial parameter

The above-mentioned QCL type may configure and/or indicate, as a Transmission Configuration Indication (TCI), the QCL assumption with respect to one or two reference signals and the PDCCH or the PDSCH DMRS in the RRC and/or the MAC layer and/or the DCI. For example, in a case that the index #2 of the SS/PBCH block and the QCL type A + the QCL type B are configured and/or indicated as one state of the TCI at the time of receiving the PDCCH by the terminal apparatus 1, the terminal apparatus 1 may assume, at the time of receiving the PDCCH DMRS, the Doppler shift, the Doppler spread, the average delay, the delay spread, and the reception spatial parameter in reception of the SS/PBCH block index #2 as the channel long term properties, and may receive the DMRS of the PDCCH to perform synchronization or channel estimation. At this time, the reference signal (in the above-mentioned example, the SS/PBCH block) indicated by the TCI may be referred to as a source reference signal, and a reference signal (in the above-mentioned example, the PDCCH DMRS) affected by the long term properties inferred from the channel long term properties in reception of the source reference signal may be referred to as a target reference signal. A combination of multiple TCI states in the RRC, the source reference signal for each state, and the QCL type may be configured for the TCI, and the TCI may be indicated to the terminal apparatus 1 by the MAC layer or the DCI.

According to this method, operation of the base station apparatus 3 and the terminal apparatus 1 equivalent to beam management may be defined based on the spatial domain QCL assumption and the radio resources (the time and/or the frequency) as beam management and beam indication/report.

The subframe will now be described. The subframe in the present embodiment may also be referred to as a resource unit, a radio frame, a time period, or a time interval.

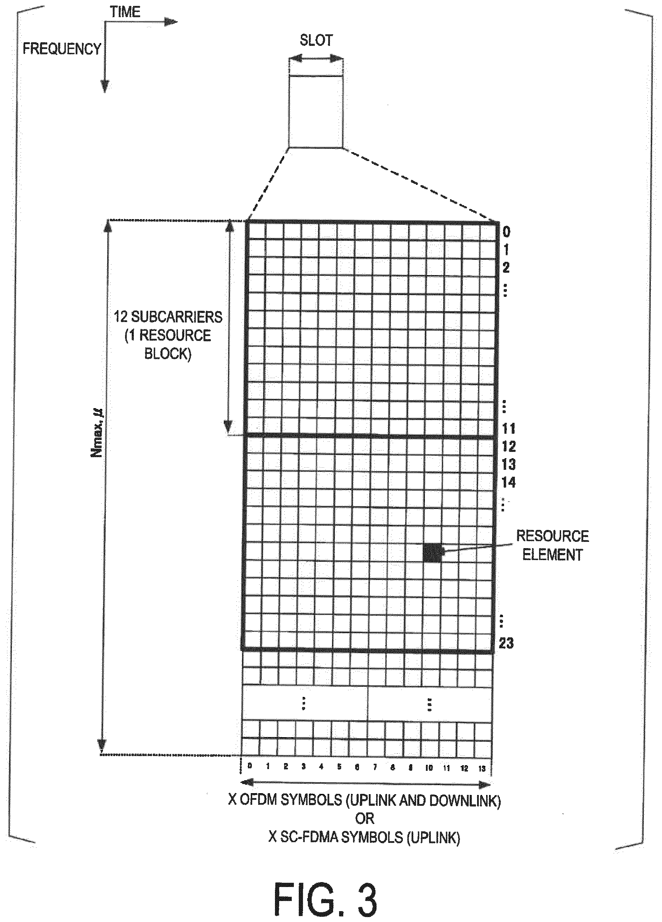

FIG. 3 is a diagram illustrating a schematic configuration of the uplink and downlink slots according to a first embodiment of the present invention. Each of the radio frames is 10 ms in length. Furthermore, each of the radio frames includes 10 subframes and W slots. For example, one slot includes X OFDM symbols. In other words, the length of one subframe is 1 ms. For each of the slots, time length is defined based on subcarrier spacings. For example, in a case that the subcarrier spacing of an OFDM symbol is 15 kHz and Normal Cyclic Prefixes (NCPs) are used, X = 7 or X = 14, and X = 7 ad X = 14 correspond to 0.5 ms and 1 ms, respectively. In addition, in a case that the subcarrier spacing is 60 kHz, X = 7 or X = 14, and X = 7 and X = 14 correspond to 0.125 ms and 0.25 ms, respectively. For example, in the case of X = 14, W = 10 is used for the subcarrier spacing being 15 kHz, and W = 40 is used for the subcarrier spacing being 60 kHz. FIG. 3 illustrates a case of X = 7 as an example. Note that a case of X = 14 can be similarly configured by expanding the case of X = 7. Furthermore, the uplink slot is defined similarly, and the downlink slot and the uplink slot may be defined separately. The cell bandwidth of FIG. 3 may be also defined as a part of band (Bandwidth Part (BWP)). Moreover, the slot may be also defined as a Transmission Time Interval (TTI). The slot may not be defined as the TTI. The TTI may be a transport block transmission period.

The signal or the physical channel transmitted in each of the slots may be represented by a resource grid. The resource grid is defined by multiple subcarriers and multiple OFDM symbols. The number of subcarriers constituting one slot depends on each of the downlink and uplink bandwidths of a cell. Each element in the resource grid is referred to as a resource element. The resource element may be identified by using a subcarrier number and an OFDM symbol number.

A resource grid is used to represent mapping of a certain physical downlink channel (such as the PDSCH) or an uplink channel (such as the PUSCH) to a resource element. For example, in a case that the subcarrier spacing is 15 kHz and the number X of OFDM symbols included in the subframe is 14 and the NCPs are used, one physical resource block is defined by 14 continuous OFDM symbols in the time domain and by 12 * Nmax continuous subcarriers in the frequency domain. The Nmax is the maximum number of resource blocks determined by a subcarrier spacing configuration µ described below. That is, the resource grid includes (14 * 12 * Nmax, µ) resource elements. In the case of Extended CPs (ECPs), the ECPs are supported only in a subcarrier spacing of 60 kHz, and therefore, one physical resource block is, for example, defined by 12 (the number of OFDM symbols included in one slot) * 4 (the number of slots included in one subframe) = 48 continuous OFDM symbols in the time domain and by 12 * Nmax, µ continuous subcarriers in the frequency domain. That is, the resource grid includes (48 * 12 * Nmax, µ) resource elements.

As the resource block, a common resource block, a physical resource block, and a virtual resource block are defined. One resource block is defined as 12 continuous subcarriers in the frequency domain. A subcarrier index 0 at a common resource block index 0 may be referred to as a reference point (may be referred to as point A). The common resource block is a resource block numbered from 0 in an ascending order in each subcarrier spacing configuration µ from the reference point A. The resource grid described above is defined by this common resource block. The physical resource block is a resource block numbered from 0 included in the later-described bandwidth part (BWP) in an ascending order, and the physical resource block is a resource block numbered from 0 included in the bandwidth part (BWP) in an ascending order. A certain physical uplink channel is first mapped to a virtual resource block. Thereafter, the virtual resource block is mapped to a physical resource block.

Next, the subcarrier spacing configuration µ will be described. As described above, multiple OFDM numerologies are supported in the NR. In a certain BWP, the subcarrier spacing configuration µ (µ = 0, 1, ..., 5) and the cyclic prefix length are given to the BWP of the downlink by the higher layer (higher layer), and is given to the BWP of the uplink by the higher layer. In a case that µ is given, the subcarrier spacing Δf is given by Δf= 2^{∧}µ ^{*} 15 (kHz).

In the subcarrier spacing configuration µ, the slot is counted in an ascending order from 0 to N^{∧} {subframe, µ}_{slot} - 1 in the subframe, and is counted in an ascending order from 0 to N^{∧} {frame, µ}_{slot} - 1 in the frame. N^{∧} {slot}_{symb} continuous OFDM symbols are in the slot based on the slot configuration and the cyclic prefix. N^{∧} {slot}_{symb} is 14. The start of the slot n^{∧}{µ}_{s} in the subframe is aligned with the start of the n^{∧}{µ}_{s} · N^{∧} {slot}_{symb}-th OFDM symbol in the same subframe in terms of time.

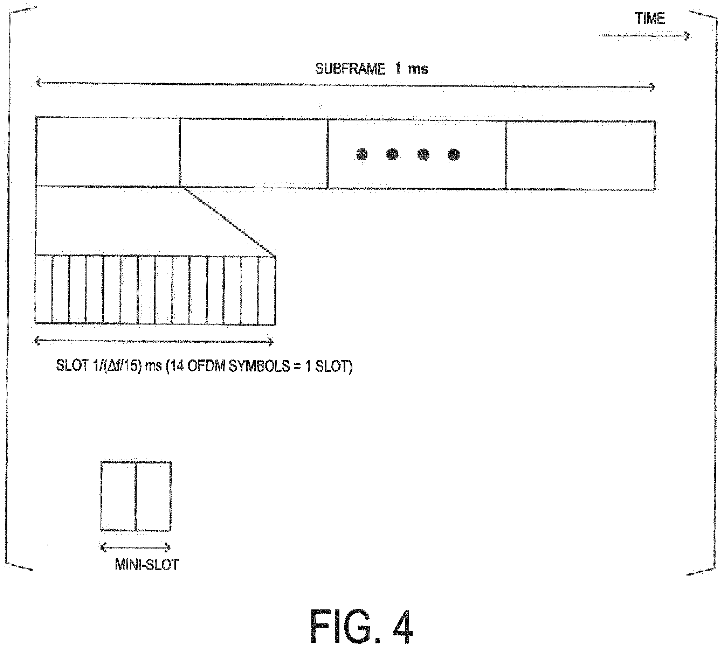

The subframe, the slot, and a mini-slot will now be described. FIG. 4 is a diagram illustrating the relationship among the subframe, the slot, and the mini-slot in the time domain. As illustrated in this figure, three types of time units are defined. The subframe is 1 ms regardless of the subcarrier spacing. The number of OFDM symbols included in the slot is 7 or 14, and the slot length depends on the subcarrier spacing. Here, in a case that the subcarrier spacing is 15 kHz, 14 OFDM symbols are included in one subframe. The downlink slot may be referred to as a PDSCH mapping type A. The uplink slot may be referred to as a PUSCH mapping type A.

The mini-slot (which may be referred to as a sub-slot) is a time unit including OFDM symbols that are less in number than the OFDM symbols included in the slot. FIG. 4 illustrates, by way of example, a case in which the mini-slot includes 2 OFDM symbols. The OFDM symbols in the mini-slot may match the timing for the OFDM symbols constituting the slot. Note that the smallest unit of scheduling may be a slot or a mini-slot. Moreover, allocation of a mini-slot may be referred to as non-slot based scheduling. Scheduling of a mini-slot may be expressed as scheduling of a resource in which the relative time positions of the start positions of the reference signal and the data are fixed. The downlink mini-slot may be referred to as a PDSCH mapping type B. The uplink mini-slot may be referred to as a PUSCH mapping type B.

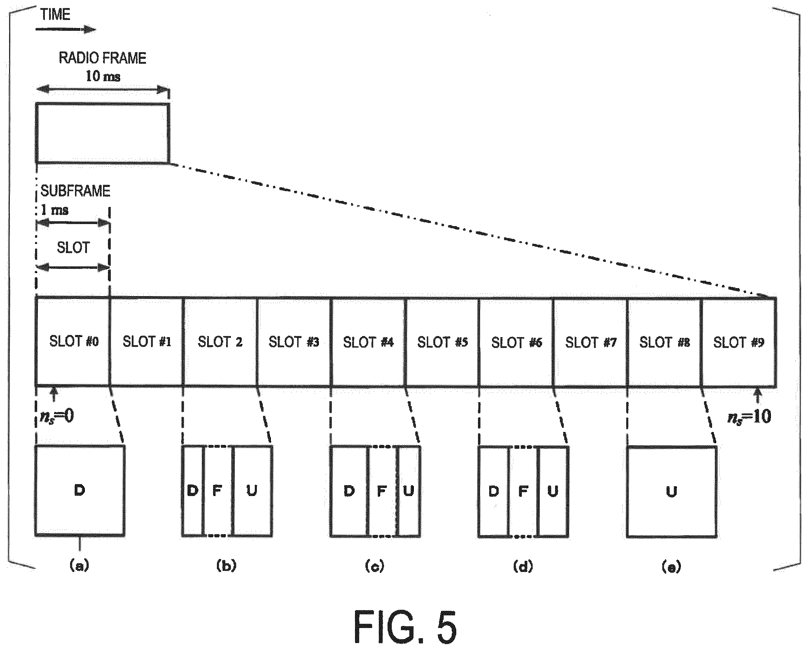

FIG. 5 is a diagram illustrating an example of a slot format. Here, a case that the slot length is 1 ms at a subcarrier spacing of 15 kHz is illustrated as an example. In this figure, D represents the downlink, and U represents the uplink. As illustrated in this figure, during a certain time period (for example, the minimum time period to be allocated to one UE in the system), at least one or more of the followings may be included:
- Downlink symbol;
- Flexible symbol; and
- Uplink symbol.

Note that a ratio of these may be determined in advance as slot formats. The ratio may be defined by the number of downlink OFDM symbols included in the slot or the start position and the end position in the slot. The ratio may be defined by the number of uplink OFDM symbols or DFT-S-OFDM symbols included in the slot or the start position and the end position in the slot. Note that scheduling of the slot may be expressed as scheduling of a resource in which the relative time positions of the reference signal and the slot boundary are fixed.

The terminal apparatus 1 may receive a downlink signal or a downlink channel in a downlink symbol or a flexible symbol. The terminal apparatus 1 may transmit an uplink signal or a downlink channel in an uplink symbol or a flexible symbol.

FIG. 5(a) is an example where the whole of a certain time period(may be referred to as, e.g., the minimum unit or the time unit of the time resource that can be allocated to one UE, and may be referred to as a time unit in which the multiple minimum units of the time resource are bundled) is used for downlink transmission, and FIG. 5(b) illustrates that uplink scheduling is performed via, e.g., the PDCCH in a first time resource and an uplink signal is transmitted through a flexible symbol including the processing delay of the PDCCH, the switching time from the downlink to the uplink, and generation of a transmit signal. FIG. 5(c) is used for transmission of the PDCCH and/or the downlink PDSCH in the first time resource, and is used for transmission of the PUSCH or the PUCCH via a gap for the processing delay, the switching time from the downlink to the uplink, and generation of the transmit signal. Here, for example, the uplink signal may be used to transmit the HARQ-ACK and/or CSI, namely, the UCI. FIG. 5(d) is used for transmission of the PDCCH and/or the PDSCH in the first time resource, and is used for transmission of the uplink PUSCH and/or the PUCCH via the gap for the processing delay, the switching time from the downlink to the uplink, and generation of the transmit signal. Here, for example, the uplink signal may be used to transmit the uplink data, namely, the UL-SCH. FIG. 5(e) is an example where the entirety is used for uplink transmission (the PUSCH or the PUCCH).

The above-described downlink part and uplink part may include multiple OFDM symbols as is the case with LTE.

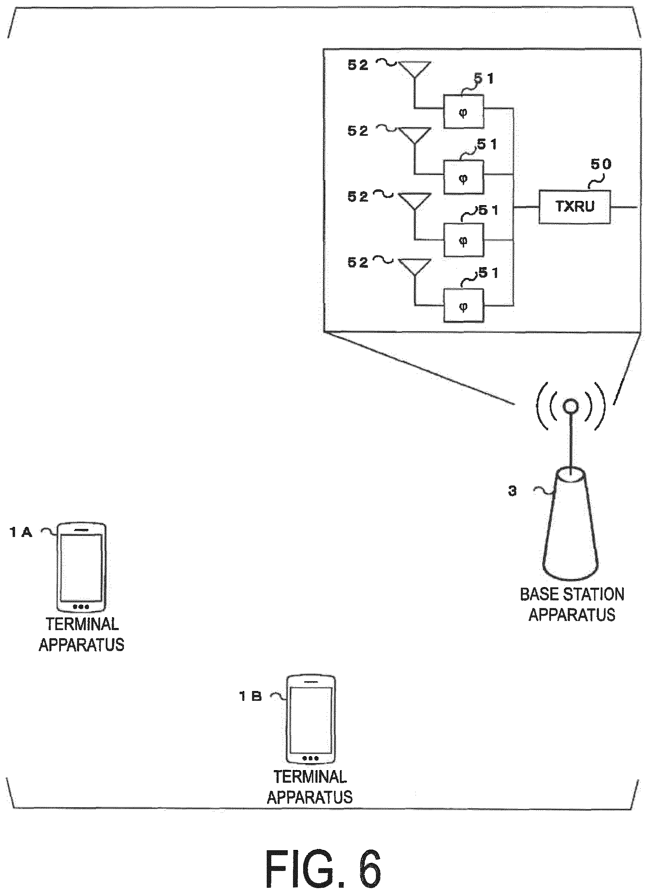

FIG. 6 is a diagram illustrating an example of beamforming. Multiple antenna elements are connected to one Transceiver unit (TXRU) 50. The phase is controlled by using a phase shifter 51 for each antenna element and a transmission is performed from an antenna element 52, thus allowing a beam for a transmit signal to be directed in any direction. Typically, the TXRU may be defined as an antenna port, and only the antenna port may be defined for the terminal apparatus 1. Control of the phase shifter 51 allows setting of directivity in any direction, and therefore, the base station apparatus 3 can communicate with the terminal apparatus 1 by using a high gain beam.

Hereinafter, the bandwidth part (BWP) will be described. The BWP is also referred to as a carrier BWP. The BWP may be configured for each of the downlink and the uplink. The BWP is defined as a set of continuous physical resources selected from a continuous subset of common resource blocks. Up to four BWPs for which one downlink carrier BWP is activated at certain time may be configured for the terminal apparatus 1. Up to four BWPs for which one uplink carrier BWP is activated at certain time may be configured for the terminal apparatus 1. In the case of carrier aggregation, the BWP may be configured in the serving cell. At this time, configuration of one BWP in a certain serving cell may be expressed as no BWP being configured. Furthermore, configuration of two or more BWPs may be expressed as configuration of the BWP.

### MAC Entity Operation

In an activated serving cell, there is always one active (activated) BWP. BWP switching for a certain serving cell is used to activate an inactive (deactivated) BWP and deactivate an active (activated) BWP. BWP switching for a certain serving cell is controlled by the PDCCH indicating downlink allocation or uplink grant. BWP switching for a certain serving cell may be further controlled by the MAC entity itself at the start of a BWP inactivity timer or a random access procedure. In addition of the SpCell (PCell or PSCell) or activation of the SCell, one BWP is initially active without receiving the PDCCH indicating downlink allocation or uplink grant. The initially-active BWP may be specified by an RRC message transmitted from the base station apparatus 3 to the terminal apparatus 1. An active BWP for a certain serving cell is specified by the RRC or the PDCCH transmitted from the base station apparatus 3 to the terminal apparatus 1. In an Unpaired spectrum (a TDD band or the like), a DL BWP and an UL BWP are paired, and BWP switching is common to the UL and the DL. In an active BWP for each activated serving cell for which the BWP is configured, the MAC entity of the terminal apparatus 1 applies normal processing. The normal processing includes transmission of the UL-SCH, transmission of the RACH, monitoring of the PDCCH, transmission of the PUCCH, transmission of the SRS, and reception of the DL-SCH. In an inactive BWP for each activated serving cell for which the BWP is configured, the MAC entity of the terminal apparatus 1 does not transmit the UL-SCH, does not transmit the RACH, does not monitor the PDCCH, does not transmit the PUCCH, and does not transmit the SRS, and does not receive the DL-SCH. In a case that a certain serving cell is deactivated, the active BWP may not be present (e.g., the active BWP is deactivated).

### RRC Operation

A BWP information element (IE) included in the RRC message (broadcast system information or information transmitted in a dedicated RRC message) is used to configure the BWP. The RRC message transmitted from the base station apparatus 3 is received by the terminal apparatus 1. For each serving cell, a network (the base station apparatus 3 or the like) configures, for the terminal apparatus 1, at least an initial BWP including a downlink BWP and one (e.g., the case of configuring the uplink for the serving cell) or two (e.g., the case of using a supplementary uplink) uplink BWPs. Furthermore, the network may configure an additional uplink BWP and downlink BWP for a certain serving cell. The BWP configuration is divided into an uplink parameter and a downlink parameter. Furthermore, the BWP configuration is also divided into a common parameter and a dedicated parameter. The common parameter (a BWP uplink common IE, a BWP downlink common IE, or the like) is a cell-specific parameter. The common parameter of the initial BWP of the primary cell is also provided by system information. For all of other serving cells, the network provides the common parameter by a dedicated signal. The BWP is identified by a BWP ID. The BWP ID of initial BWP is 0. The BWP IDs of the other BWPs take values of 1 to 4.

The dedicated parameter of the uplink BWP includes the SRS configuration. The uplink BWP corresponding to the dedicated parameter of the uplink BWP is associated with one or more SRSs corresponding to the SRS configuration included in the dedicated parameter of the uplink BWP.

One primary cell and up to 15 secondary cells may be configured for the terminal apparatus 1.

The Random Access procedure of the present embodiment will be described.

The random access procedure is classified into two procedures, a Contention Based (CB) procedure and a non-contention based (non-CB) (may be also referred to as Contention Free (CF)) procedure. The contention based random access is also referred to as a CBRA, and the non-contention based random access is also referred to as a CFRA.

The random access procedure is initiated by a PDCCH order, the MAC entity, notification of beam failure from a lower layer, an RRC, or the like.

The contention based random access procedure is initiated by the PDCCH order, the MAC entity, notification of the beam failure from the lower layer, the RRC, or the like. In a case that the beam failure notification is provided from the physical layer of the terminal apparatus 1 to the MAC entity of the terminal apparatus 1 and a certain condition is satisfied, the MAC entity of the terminal apparatus 1 initiates the random access procedure. The procedure for determining whether or not the certain condition has been satisfied and initiating the random access procedure in a case that the beam failure notification is provided from the physical layer of the terminal apparatus 1 to the MAC entity of the terminal apparatus 1 may be referred to as a beam failure recovery procedure. This random access procedure is a random access procedure for a beam failure recovery request. The random access procedure initiated by the MAC entity includes a random access procedure initiated by a scheduling request procedure. The random access procedure for the beam failure recovery request may or may not be considered as the random access procedure initiated by the MAC entity. The random access procedure for the beam failure recovery request and the random access procedure initiated by the scheduling request procedure may perform different procedures, and thus, the random access procedure for the beam failure recovery request and the scheduling request procedure may be differentiated. The random access procedure for the beam failure recovery request and the scheduling request procedure may be a random access procedure initiated by the MAC entity. In a certain embodiment, a random access procedure initiated by the scheduling request procedure may be referred to as a random access procedure initiated by the MAC entity, and a random access procedure for the beam failure recovery request may be referred to as a random access procedure based on the beam failure notification from the lower layer. Hereinafter, initiation of the random access procedure in the case of receiving the beam failure notification from the lower layer may also mean initiation of the random access procedure for the beam failure recovery request.

The terminal apparatus 1 performs the contention based random access procedure at the time of an initial access from a state in which the terminal apparatus 1 is not connected (communicated) with the base station apparatus 3 and/or at the time of scheduling request in a case that the uplink data or the sidelink data transmittable to the terminal apparatus 1 connected with the base station apparatus 3 has been generated. Note that the use of the contention based random access is not limited thereto.

Generation of the uplink data which can be transmitted by the terminal apparatus 1 may include triggering of a buffer status report corresponding to the transmittable uplink data. Generation of the uplink data that can be transmitted by the terminal apparatus 1 may include pending of the scheduling request triggered based on generation of the transmittable uplink data.

Generation of the sidelink data transmittable to the terminal apparatus 1 may include triggering of the buffer status report corresponding to the transmittable sidelink data. Generation of the sidelink data transmittable to the terminal apparatus 1 may include pending of the scheduling request triggered based on generation of the transmittable sidelink data.

The non-contention based random access procedure may be initiated in a case that the terminal apparatus 1 receives information indicating initiation of the random access procedure from the base station apparatus 3. The non-contention based random access procedure may be initiated in a case that the MAC layer of the terminal apparatus 1 receives the beam failure notification from the lower layer.

The non-contention based random access may be used to quickly perform uplink synchronization between the terminal apparatus 1 and the base station apparatus 3 in a case that the base station apparatus 3 and the terminal apparatus 1 are connected, but the handover or the transmission timing of a mobile station apparatus is not enabled. The non-contention based random access may be used to transmit the beam failure recovery request in a case that the beam failure has occurred in the terminal apparatus 1. Note that the use of the non-contention based random access is not limited thereto.

Note that information indicating initiation of such a random access procedure may be referred to as a message 0, Msg. 0, an NR-PDCCH order, a PDCCH order, or the like.

Note that in a case that a random access preamble index indicated by the message 0 is a pre-determined value (e.g., in a case that all of the bits are 0), the terminal apparatus 1 may perform the contention based random access procedure for randomly selecting and transmitting one from a set of preambles available for the terminal apparatus 1.

The terminal apparatus 1 of the present embodiment receives random access configuration information via the higher layer before initiating the random access procedure. The random access configuration information may include the following information or information for determining/configuring the following information:
- a set of one or more time/frequency resources (also referred to as a random access channel occasion (occasion), a PRACH occasion, or a RACH occasion) available for transmission of the random access preamble;
- one or more random access preamble groups;
- one or more available random access preambles or one or more random access preambles available in the multiple random access preamble groups;
- a random access response window size and a Contention Resolution timer (mac-ContentionResolutionTimer) ;
- a power ramping step;
- the maximum number of preamble transmissions;
- the initial power of the preamble (may be a target receive power);
- a power offset based on a preamble format;
- the maximum number of power rampings;
- the threshold of a reference signal received power (RSRP) for selection of an SS/PBCH block (may associate to random access preamble and/or a PRACH occasion);
- the threshold of the reference signal receive power (RSRP) for selection of a CSI-RS (may associate to random access preamble and/or a PRACH occasion);
- information for determining a PRACH occasion allocated to an SS/PBCH block in which the MAC entity transmits a random access preamble;
- a parameter indicating the number of SS/PBCH blocks mapped to each PRACH occasion;
- the number of random access preambles mapped to each SS/PBCH block;
- the number of random access preambles in a random access preamble group A for each SS/PBCH block; and
- a set of random access preambles and/or PRACH occasions for the beam failure recovery request.

Note that the random access configuration information may include common information in the cell, and may include different types of dedicated information for each terminal.

Note that part of the random access configuration information may be associated with all SS/PBCH blocks in the SS burst set. Note that part of the random access configuration information may be associated with all of one or more configured CSI-RSs. Note that part of the random access configuration information may be associated with one downlink transmission beam (or beam index).

Note that part of the random access configuration information may be associated with one SS/PBCH block in the SS burst set. Note that part of the random access configuration information may be associated with one of one or more configured CSI-RSs. Note that part of the random access configuration information may be associated with one downlink transmission beam (or beam index). Note that the information associated with one SS/PBCH block, one CSI-RS, and/or one downlink transmission beam may include index information (e.g., may be an SSB index, a beam index, or a QCL configuration index) for identifying one corresponding SS/PBCH block, one corresponding CSI-RS, and/or one corresponding downlink transmission beam.

Note that the random access configuration information may be configured for each SS/PBCH block in the SS burst set, or a single piece of random access configuration information common to all SS/PBCH blocks in the SS burst set may be configured. The terminal apparatus 1 may receive one or more pieces of random access configuration information by a downlink signal, and each of the one or more pieces of random access configuration information may be associated with an SS/PBCH block (may be a CSI-RS or a downlink transmission beam). The terminal apparatus 1 may select one of the received one or more SS/PBCH blocks (may be CSI-RSs or downlink transmission beams), and may perform the random access procedure using the random access configuration information associated with the selected SS/PBCH block.

Note that a set of one or more PRACH occasions available for transmission of the random access preamble may be identified by a higher layer parameter prach-ConfigIndex provided in the higher layer (higher layer signaling). According to a PRACH configuration (physical random access channel configuration) index given by prach-ConfigIndex and a predetermined table (also referred to as a random access channel configuration (PRACH config) table), a set of one or more PRACH occasions available for transmission of the random access preamble is identified. Note that the identified one or more PRACH occasions may be a set of PRACH occasions associated with each of the one or more SS/PBCH blocks transmitted by the base station apparatus 3.

Note that the PRACH configuration index may be used to configure a period (PRACH configuration period (physical random access channel configuration period (PRACH configuration period))) in which a set of PRACH occasions illustrated in the random access configuration table is temporally repeated, a random access preamble transmittable subcarrier index, a resource block index, a subframe number, a slot number, a system frame number, a symbol number, and/or a preamble format.

Note that the number of SS/PBCH blocks mapped to each PRACH occasion may be indicated by a higher layer parameter SSB-perRACH-Occasion provided in the higher layer. In a case that the SSB-perRACH-Occasion is a value smaller than 1, one SS/PBCH block is mapped to multiple continuous PRACH occasions.

Note that the number of random access preambles mapped to each SS/PBCH block may be indicated by a higher layer parameter cb-preamblePerSSB provided in the higher layer. The number of random access preambles mapped to each SS/PBCH block for each PRACH occasion may be calculated from the SSB-perRACH-Occasion and the cb-preamblePerSSB. The index of the random access preamble mapped to each SS/PBCH block for each PRACH occasion may be identified from the SB-perRACH-Occasion, the cb-preamblePerSSB, and the SSB index.

For the PRACH occasion, the SSB index may be mapped according to the following rules.
(1) First, the preamble index is mapped in an ascending order for one PRACH occasion. For example, in a case that the number of preambles for the PRACH occasion is 64 and the number of random access preambles mapped to each SS/PBCH block for each PRACH occasion is 32, the SSB index mapped for a certain PRACH occasion is n and n + 1.
(2) Secondly, the frequency resource index is mapped in an ascending order for multiple frequency-multiplexed PRACH occasions. For example, in a case that two PRACH occasions are frequency-multiplexed and the SSB index mapped to the PRACH occasion with a smaller frequency resource index is n and n + 1, the SSB index mapped to the PRACH occasion with a greater frequency resource index is n + 2 and n + 3.
(3) Thirdly, the time resource index is mapped in an ascending order for multiple time-multiplexed PRACH occasions in a PRACH slot. For example, in addition to the example of (2) above, in a case that two additional PRACH occasions are multiplexed in a time direction within the PRACH slot, the SSB index mapped to these PRACH occasions is n + 4, n + 5, n + 6, and n + 7.
(4) Fourthly, the indices are mapped to the multiple PRACH slots in an ascending order. For example, in a case that there is a RACH occasion in a next PRACH slot in addition to the example of (3) above, the SSB index to be mapped is n + 8, n + 9, .... Note that in the above-mentioned examples, in a case that n + x is greater than the maximum value of the SSB index, the value of the SSB index returns to 0.

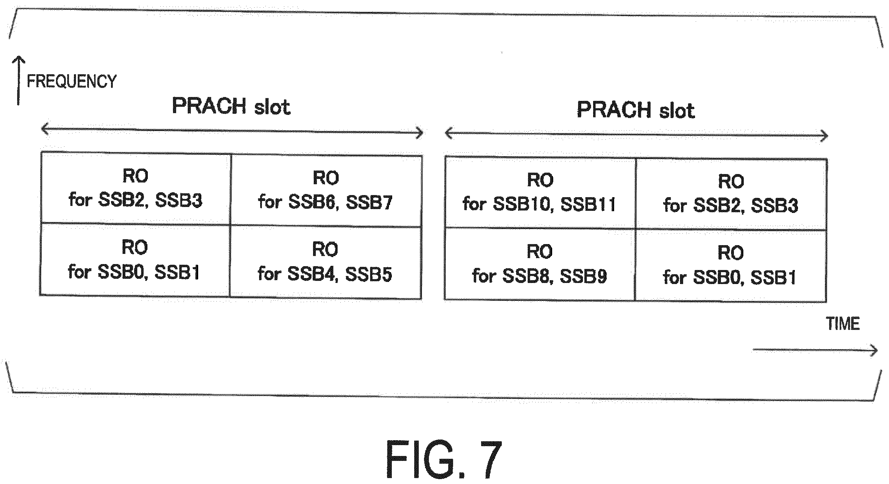

FIG. 7 is a diagram illustrating an example of allocation of the SSB index for the PRACH occasion according to the embodiment of the present invention. FIG. 7 illustrates an example where there are two PRACH slots in a certain time period, there are two PRACH occasions (RO) in the time direction and two PRACH occasions in the frequency direction in one PRACH slot, and there is an SSB index of 0 to 11. Two SSB indices are mapped for one PRACH occasion and are mapped according to the rules of (1) to (4) above, and starting from the SSB index 0, are again mapped from the seventh PRACH occasion.

The SSB indices are mapped for each PRACH occasion, but even in a case that all PRACH occasions in a PRACH configuration period identified by the prach-ConfigIndex are used and all SSB indices (all SS/PBCH blocks transmitted from the base station apparatus 3) are not mapped, the SSB indices may be mapped across multiple PRACH configuration periods. Note that the number of all SS/PBCH blocks transmitted by the base station apparatus 3 may be indicated by a higher layer parameter. A period in which the PRACH configuration period is repeated a prescribed number of times such that each SSB index is mapped at least once is referred to as an association period. The number of times of the PRACH configuration periods forming the association period may be the minimum value satisfying the above-mentioned conditions among a set of multiple predetermined values. The predetermined set of the multiple predetermined values may be determined for each PRACH configuration period. Note that in a case that all SSB indices are mapped to the PRACH occasions in the association period and the number of remaining PRACH occasions is greater than the number of SS/PBCH blocks, the SSB indices may be further mapped to the remaining PRACH occasions. Note that in a case that all SSB indices are mapped to the PRACH occasions in the association period and the number of remaining PRACH occasions is less than the number of SS/PBCH blocks, the SSB indices are not necessarily mapped to the remaining PRACH occasions. A cycle in which the PRACH occasion is allocated once to each of all SSB indices is referred to as an SSB index allocation cycle. In a case that the SSB-perRACH-Occasion is 1 or more, each SSB index is mapped to one PRACH occasion for the single SSB index allocation cycle. In a case that the SSB-perRACH-Occasion is a value of 1 or less, each SSB index is mapped to the PRACH occasion of 1/SSB-perRACH-Occasion for the single SSB index allocation cycle. The terminal apparatus 1 may identify the association period based on the PRACH configuration period indicated by the PRACH configuration index and the number of SS/PBCH blocks specified by the higher layer parameter provided in the higher layer (higher layer signaling).

Each of one or more random. access preamble groups included in the random access configuration information may be associated with each reference signal (e.g., an SS/PBCH block, a CSI-RS, or a downlink transmission beam). The terminal apparatus 1 may select the random access preamble group based on a received reference signal (e.g., an SS/PBCH block, a CSI-RS, or a downlink transmission beam).

Note that the random access preamble group associated with each SS/PBCH block may be identified by one or more parameters notified from the higher layer. One of the one or more parameters may be one index (e.g., a start index) of one or more available preambles. One of the one or more parameters may be the number of preambles available for the contention based random access per SS/PBCH block. One of the one or more parameters may be the total of the number of preambles available for the contention based random access per SS/PBCH block and the number of preambles available for the non-contention based random access. One of the one or more parameters may be the number of SS/PBCH blocks associated with one PRACH occasion.

Note that the terminal apparatus 1 may receive one or more downlink signals transmitted using one downlink transmission beam, receive the random access configuration information associated with one of these downlink signals, and perform the random access procedure based on the received random access configuration information. The terminal apparatus 1 may receive one or more SS/PBCH blocks in the SS burst set, receive the random access configuration information associated with one of these SS/PBCH blocks, and perform the random access procedure based on the received random access configuration information. The terminal apparatus 1 may receive one or more CSI-RSs, receive the random access configuration information associated with one of these CSI-RSs, and perform the random access procedure based on the received random access configuration information.

One or more pieces of random access configuration information may include one random access channel configuration (RACH-Config) and/or one physical random access channel configuration (PRACH-Config).

A parameter related to the random access for each reference signal may be included in the random access channel configuration.

A parameter (a PRACH configuration index, a PRACH occasion, or the like) related to the physical random access channel for each reference signal may be included in the physical random access channel configuration.

One piece of random access configuration information may indicate a parameter related to a random access corresponding to one reference signal, and multiple pieces of random access configuration information may indicate a parameter related to multiple random accesses corresponding to multiple reference signals.

One piece of random access configuration information may indicate a parameter related to a physical random access corresponding to one reference signal, and may indicate a parameter related to multiple random accesses corresponding to multiple reference signals.

In a case that the corresponding reference signal is selected, the random access configuration information (a random access channel configuration corresponding to the reference signal, a physical random access channel configuration corresponding to the reference signal) corresponding to the reference signal may be selected.

Note that the terminal apparatus 1 may receive one or more pieces of random access configuration information from the base station apparatus 3 and/or the transmission reception point 4 different from the base station apparatus 3 and/or the transmission reception point 4 that transmits a random access preamble. For example, the terminal apparatus 1 may transmit a random access preamble to the second base station apparatus 3 based on at least one piece of random access configuration information received from the first base station apparatus 3.

Note that the base station apparatus 3 may receive a random access preamble transmitted by the terminal apparatus 1 to determine a downlink transmission beam to be applied in transmission of a downlink signal to the terminal apparatus 1. The terminal apparatus 1 may transmit a random access preamble using a PRACH occasion indicated in random access configuration information associated with a certain downlink transmission beam. The base station apparatus 3 may determine, based on a random access preamble received from the terminal apparatus 1 and/or a PRACH occasion having received the random access preamble, a downlink transmission beam to be applied in transmission of a downlink signal to the terminal apparatus 1.

The base station apparatus 3 transmits, to the terminal apparatus 1, an RRC parameter as an RRC message including one or more pieces of random access configuration information (may include a random access resource).

The terminal apparatus 1 may select one or more available random access preambles and/or one or more available PRACH occasions to be used in the random access procedure based on a channel characteristic between the terminal apparatus 1 and the base station apparatus 3. The terminal apparatus 1 may select one or more available random access preambles and/or one or more available PRACH occasions to be used in the random access procedure based on a channel characteristic (e.g., may be a reference signal received power (RSRP)) measured by a reference signal (e.g., an SS/PBCH block and/or a CSI-RS) received from the base station apparatus 3.

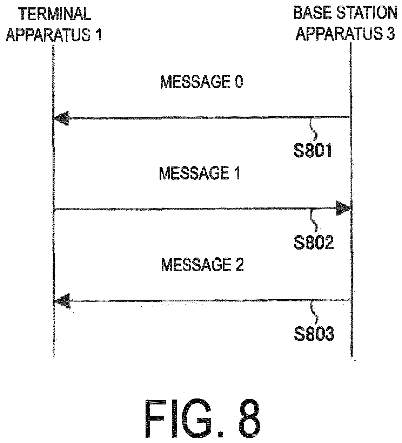

The random access procedure in a case that the terminal apparatus 1 receives the message 0 from the base station apparatus 3 is implemented by transmission and reception of multiple messages between the terminal apparatus 1 and the base station apparatus 3, as illustrated in FIG. 8.

### Message 0 (S801)

The base station apparatus 3 allocates one or more non-contention based random access preambles to the terminal apparatus 1 by downlink dedicated signaling (also referred to as a message 0 or Msg0). Note that the non-contention based random access preamble may be a random access preamble not included in a set notified by broadcast signaling. In a case that multiple reference signals are transmitted, the base station apparatus 3 may allocate multiple non-contention based random access preambles corresponding to each of at least some of the multiple reference signals to the terminal apparatus 1.

The message 0 may be an indication information indicating the initiation of the random access procedure from the base station apparatus 3 to the terminal apparatus 1. The message 0 may be a handover (HO) command generated by a target base station apparatus 3 and transmitted by a source base station apparatus 3 for handover. The message 0 may be an SCG change command transmitted by the base station apparatus 3 to change a secondary cell group. The handover command and the SCG change command are also referred to as synchronization reconfigurations. This synchronization reconfiguration (e.g., reconfiguration with sync) is transmitted in an RRC message. The synchronization reconfiguration is used for an RRC reconfiguration (e.g., a handover command) with synchronization to a PCell and an RRC reconfiguration (e.g., an SCG change command) with synchronization to a PSCell. The message 0 may be transmitted in an RRC signal and/or a PDCCH. The message 0 transmitted in the PDCCH may be referred to as a PDCCH order. The PDCCH order may be transmitted in a DCI in a certain DCI format. The message 0 may include information to which a non-contention based random access preamble is allocated.

Bit information notified in the message 0 may include preamble index information, SSB index information, mask index information (may be referred to as a RACH occasion index), Supplemental UpLink (SUL) information, BWP index information, SRS Resource Indicator (SRI) information, reference signal selection indication information (Reference Signal Selection Indicator), random access configuration selection indication information (Random Access Configuration Selection Indicator), RS type selection indication information, single/multiple message 1 transmission identification information (Single/Multiple Msg. 1 Transmission Indicator),and/or a TCI.

The preamble index information is information indicating one or more preamble indices used to generate a random access preamble. Note that in a case that the preamble index information is a pre-determined value, the terminal apparatus 1 may randomly select one of one or more random access preambles available for the contention based random access procedure.

The SSB index information is information indicating an SSB index corresponding to any one of one or more SS/PBCH blocks transmitted by the base station apparatus 3. The terminal apparatus 1 having received the message 0 identifies a group of PRACH occasions to which the SSB index indicated by the SSB index information has been mapped. The SSB index mapped to each PRACH occasion is determined by a PRACH configuration index, a higher layer parameter SB-perRACH-Occasion, and a higher layer parameter cb-preamblePerSSB.

The mask index information is information indicating the index of a PRACH occasion available for transmission of a random access preamble. Note that the PRACH occasion indicated by the mask index information may be one particular PRACH occasion or may indicate multiple selectable PRACH occasions, or different indices may indicate one PRACH occasion and multiple selectable PRACH occasions. The mask index information may be information indicating PRACH occasions of some of one or more PRACH occasion groups defined by a prach-ConfigurationIndex. Note that the mask index information may be information indicating some PRACH occasions in a PRACH occasion group to which a particular SSB index identified by the SSB index information has been mapped.

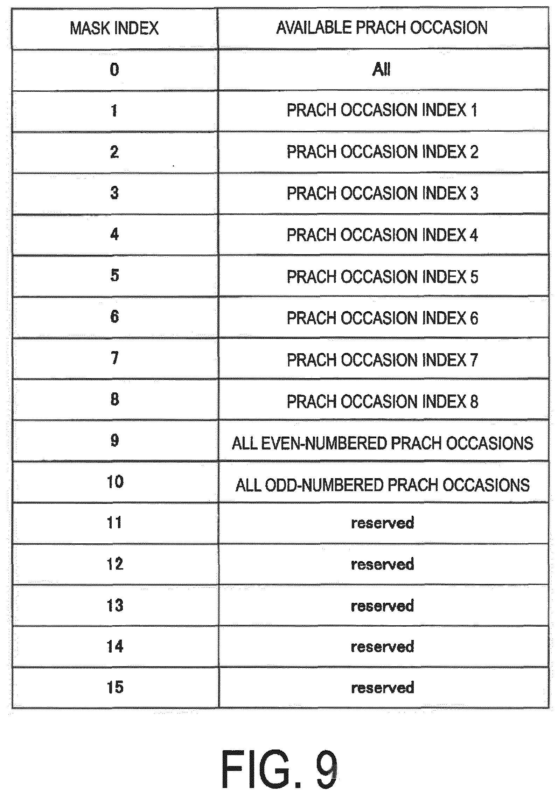

FIG. 9 is a diagram illustrating an example of the table of the mask indices according to the embodiment of the present invention. In the table illustrated as an example in FIG. 9, the mask indices are indicated by indices of 0 to 15 corresponding to different bit sequences. The mask index 0 indicates that all PRACH occasions mapped (or associated with corresponding SS/PBCH blocks) to the SSB index indicated by the SSB index information are available. The mask indices 1 to 8 indicate that PRACH occasions corresponding to PRACH occasion indices 1 to 8 of PRACH occasions mapped (or associated with corresponding SS/PBCH blocks) to the SSB index indicated by the SSB index information in the association period are available. The mask index 9 indicates that all of even-numbered PRACH occasions of PRACH occasions mapped (or associated with corresponding SS/PBCH blocks) to the SSB index indicated by the SSB index information are available. The mask index 10 indicates that all of odd-numbered PRACH occasions of PRACH occasions mapped (or associated with corresponding SS/PBCH blocks) to the SSB index indicated by the SSB index information are available. In the table illustrated as an example in FIG. 9, the mask indices 11 to 15 represent reserved and are not used.

Note that in a case that the mask index indicated by the mask index information is a pre-determined value, it may be indicated that all PRACH occasions mapped to any SSB index are available regardless of the SSB index indicated by the SSB index information.

Note that in a case that the mask index indicated by the mask index information is a certain value, it may be indicated that even-numbered PRACH occasions in the time domain among all PRACH occasions mapped to any SSB index are available regardless of the SSB index indicated by SSB index information. Note that in a case that the mask index indicated by the mask index information is a pre-determined value, it may be indicated that odd-numbered PRACH occasions are available in the time domain among all PRACH occasions mapped to any SSB index regardless of the SSB index indicated by the SSB index information.

Note that in a case that the mask index indicated by the mask index information is a pre-determined value, the number of indicated available PRACH occasions may be one per time occasion (also referred to as a time instance). For example, in a case that there is multiple PRACH occasions mapped to the SSB index indicated by the SSB index information per time occasion, available PRACH occasions may be a PRACH occasion with the lowest frequency (lowest frequency resource index).

Note that an index may be allocated to the PRACH occasion index indicated by the mask index according to a certain rule. For example, the number of PRACH occasions allocated to the PRACH occasion index per time occasion may be one. For example, PRACH occasion indices may be, one by one, sequentially mapped in the time direction to multiple PRACH occasions mapped to the SSB index indicated by the SSB index information. Note that in a case that all PRACH occasion indices are not mapped in a certain period (may be the association period, the PRACH configuration period, or one radio frame), multiple PRACH occasion indices may be mapped to multiple PRACH occasions per time occasion. Note that the PRACH occasion index may be mapped in the frequency direction after having been mapped to the PRACH occasion with priority in the time direction.

Note that the PRACH occasion index indicated by the mask index may be an index indicating what number an SSB index allocation cycle in the association period is. The number of PRACH occasion indices allocated to one SSB index in one SSB index allocation cycle may be one. Note that a PRACH occasion that a PRACH occasion index is allocated to a certain SSB index in one SSB index allocation cycle may be a PRACH occasion with the smallest frequency resource index and the smallest time resource index among multiple PRACH occasions to which the SSB index is allocated.

Note that the PRACH occasion index indicated by the mask index may be sequentially mapped in the frequency direction to multiple PRACH occasions to which the SSB index indicated by the SSB index information is mapped. Note that in a case that all PRACH occasion indices are not mapped per time occasion, the remaining PRACH occasion indices may be mapped to PRACH occasions in a next time occasion.

Note that the number of PRACH occasions to which the PRACH occasion index is allocated may be one or more per association period. For example, the PRACH occasion index may be allocated for each SSB index allocation cycle, or may be allocated only to the PRACH occasion of one SSB index allocation cycle in the association period.

The SUL information is information indicating whether a random access preamble is transmitted on a normal uplink carrier or a SUL carrier.

The BWP index information is information indicating a BWP transmitting a random access preamble.

Note that the preamble index information and the mask index information may be indicated by a single piece of index information. For example, one index may indicate all or some of a preamble (may be referred to as a sequence, a code, or the like) available for transmission of a random access preamble by the terminal apparatus 1, a time resource, and a frequency resource.

Note that the preamble index information and/or the mask index information may be configured with different values for each SS/PBCH block. For example, the terminal apparatus 1 may select one of one or more received SS/PBCH blocks, and transmit a random access preamble using the preamble index information and/or the mask index information associated with the selected SS/PBCH block.

Note that the preamble index information and/or the mask index information may be configured with a value common to multiple SS/PBCH blocks. For example, the terminal apparatus 1 may select one of one or more received SS/PBCH blocks, select a random access configuration associated with the selected SS/PBCH block, and transmit a random access preamble corresponding to the received preamble index information and/or the received mask index information to an available preamble and/or an available time/frequency resource.

The SRI information is information notifying at least some of the indices of one or more SRS transmission resources configured by the base station apparatus 3. Note that the SRI information may be bitmap information corresponding to one or more SRS transmission resources configured by the base station apparatus 3.

The terminal apparatus 1 may determine, based on the received SRI information, an antenna port for transmitting the random access preamble. Note that in a case that the SRS transmission resource indicated by the SRI information is multiple resources, the terminal apparatus 1 may transmit the random access preamble on each of multiple antenna ports based on the multiple SRS transmission resources. Note that the terminal apparatus 1 may use an antenna port available for transmission and retransmission of the random access preamble as an antenna port associated with the SRS transmission resource indicated by the SRI information. The terminal apparatus 1 may transmit the random access preamble on an uplink transmission beam (transmit spatial filter configuration) associated with the SRS transmission resource indicated by the SRI information. Note that the antenna port used for transmission of the random access preamble by the terminal apparatus 1 having received the SRI information in the message 0 may be QCL with respect to the antenna port associated with the SRS transmission resource indicated by the SRI information.

The reference signal selection indication information is information indicating whether or not a reference signal (e.g., an SS/PBCH block and/or a CSI-RS) used to perform the random access procedure is selected for the terminal apparatus 1 having received the message 0. In other words, the reference signal selection indication information may be information indicating whether or not a reference signal is selected based on measurement of one or more reference signals. Note that in a case that the terminal apparatus 1 has already selected one reference signal before receiving the message 0, the reference signal selection indication information may be information indicating whether or not a reference signal is reselected based on measurement of one or more reference signals. In a case that the reference signal selection indication information indicates selection of a reference signal, the reference signal may be selected from zero, one, or more SS/PBCH blocks and zero, one, or more CSI-RSs. Note that the reference signal selection indication information may be separately selected and indicated by a reference signal type (an SS/PBCH block, a CSI-RS). For example, the reference signal selection indication information may include SS/PBCH block selection indication information indicating whether or not one SS/PBCH block is selected from one or more SS/PBCH blocks and CSI-RS selection indication information indicating whether or not one CSI-RS is selected from one or more CSI-RSs. In a case that the reference signal selection indication information indicates "not select," a reference signal may be selected based on information on the message 0 and/or a reference signal associated with a PDCCH having received the message 0. Note that in the embodiment in which the message 0 does not include the reference signal selection indication information, the terminal apparatus 1 may select a reference signal based on the information on the message 0 and/or the reference signal associated with the PDCCH having received the message 0. As another example, in the embodiment in which the reference signal selection indication information is not included in the message 0, reference signal selection processing may be performed as long as a reference signal and a random access resource are associated with an RRC parameter.

In a case that the reference signal selection indication information is indicated by the message 0, the terminal apparatus 1 may monitor one or more reference signals, and transmit a random access preamble by applying a random access configuration associated with one selected reference signal.

Note that the information indicated by the reference signal selection indication information may be indicated by other types of information indicated by the message 0. For example, the information indicated by the reference signal selection indication information may be included in the preamble index information. The terminal apparatus 1 may select one reference signal from one or more reference signals in a case that a preamble index indicated by the message 0 is a pre-determined value.

The random access configuration selection indication information is information indicating whether or not the random access configuration information used to perform the random access procedure is selected (reselected) for the terminal apparatus 1 having received the message 0. The terminal apparatus 1 having received the random access configuration selection indication information in the message 0 may select one of one or more pieces of random access configuration information received in a downlink signal, and transmit a random access preamble based on the selected random access configuration information.

Note that the information indicated by the random access configuration selection indication information may be indicated by other types of information indicated by the message 0. For example, the information indicated by the random access configuration selection indication information may be included in the preamble index information. The terminal apparatus 1 may select (reselect) the random access configuration information in a case that a preamble index indicated by the message 0 is a pre-determined value.

Note that in a case that the terminal apparatus 1 selects (reselects) a reference signal to be used for transmission of a random access preamble based on information (e.g., the preamble index information and/or the reference signal selection indication information) indicated in the message 0, a preamble index of a random access preamble used in the non-contention based random access and/or a time/frequency resource may be identified (determined) based on a CFRA-CSIRS-Resource-PDCCHorder configured in the RRC layer.

Note that a single piece of common index information may be used for the preamble index information, the SRI information, the reference signal selection indication information, and/or the random access configuration selection indication information. For example, in a case that the common index information is a first value, selection (reselection) of the random access configuration information may be performed, and in a case that the common index information is a second value, one or more reference signals may be monitored.

Note that the RS type information is information for selecting the type of reference signal. For example, the RS type information indicates whether the message 0 (may be the PDCCH order) is associated with an SS/PBCH block or a CSI-RS. For example, the RS type information indicates whether the random access preamble specified in the message 0 (may be the PDCCH order) is associated with an SS/PBCH block or a CSI-RS. For example, the RS type information indicates whether a PRACH occasion used for transmission of the message 1 by the terminal apparatus having received the message 0 (may be the PDCCH order) is associated with an SS/PBCH block or a CSI-RS.

Note that the TCI is a transmission configuration identifier (TCI), and one or more reference signals associated with the TCI are received by the terminal apparatus 1 from the base station apparatus 3 in the RRC message. Based on the TCI included in the message 0 (may be the PDCCH order), one or more reference signals associated with a PDCCH used to receive message 0 are identified. Alternatively, based on the TCI associated with a PDCCH used to receive the message 0, one or more reference signals associated with the PDCCH used to receive the message 0 are identified.

### Message 1 (S802)

The terminal apparatus 1 having received the message 0 transmits an allocated non-contention based random access preamble via the physical random access channel. This transmitted random access preamble may be referred to as a message 1 or Msgl. The random access preamble is configured such that multiple sequences is used for notifying information to the base station apparatus 3. For example, in a case that 64 types of sequence are available, 6-bit information (may be a ra-PreambleIndex or a preamble index) can be provided to the base station apparatus 3. This information is indicated as a Random Access preamble Identifier, and the terminal apparatus 1 can monitor a random access response (message 2) corresponding to this information to identify the message 2 addressed to the terminal apparatus 1 itself from the base station apparatus 3. The preamble sequence is selected from a preamble sequence set using a preamble index.

A procedure for selecting a random access resource (including a time/frequency resource and/or a preamble index) in the MAC layer of the terminal apparatus 1 will be described. The terminal apparatus 1 sets a value in the following procedure for a preamble index (may be referred to as a "PREAMBLE_INDEX") of a transmitted random access preamble.

The terminal apparatus 1 selects SS/PBCH blocks or CSI-RSs whose RSRPs exceed a certain threshold and sets a ra-PreambleIndex associated with the selected SS/PBCH blocks to a preamble index in a case that (1) the random access procedure is initiated by the beam failure notification from the lower layer, (2) a random access resource (may be a PRACH occasion) for the non-contention based random access for the beam failure recovery request associated with an SS/PBCH block (also referred to as an SSB) or a CSI-RS in an RRC parameter is provided, and (3) the RSRPs of the one or more SS/PBCH blocks or CSI-RSs exceed the certain threshold.

The terminal apparatus 1 sets a signaled ra-PreambleIndex to a preamble index in a case that (1) the ra-PreambleIndex is provided in a PDCCH or an RRC, (2) the value of the ra-PreambleIndex is not a value (e.g., 0b000000) indicating the contention based random access procedure, and (3) an SS/PBCH block or a CSI-RS and a random access resource for the non-contention based random access are not associated with each other in the RRC layer. The Obxxxxxx means a bit sequence allocated in a 6-bit information field.

The terminal apparatus 1 selects one SS/PBCH block whose RSRP exceeds a certain threshold and sets a ra-PreambleIndex associated with the selected SS/PBCH block to a preamble index in a case that (1) SS/PBCH blocks and a random access resource for the non-contention based random access are associated with each other in an RRC layer and (2) one or more SS/PBCH blocks whose RSRPs exceed the certain threshold among the associated SS/PBCH blocks are available.

The terminal apparatus 1 selects one CSI-RS whose RSRP exceeds a certain threshold and sets a ra-PreambleIndex associated with the selected CSI-RS to a preamble index in a case that (1) CSI-RSs and a random access resource for the non-contention based random access are associated with each other in an RRC and (2) one or more CSI-RSs whose RSRPs exceed the certain threshold among the associated CSI-RSs are available.

The terminal apparatus 1 performs the contention based random access procedure in a case that any of the conditions described above is not satisfied. In the contention based random access procedure, the terminal apparatus 1 selects an SS/PBCH block with an RSRP exceeding a configured threshold, and selects a preamble group. In a case that a relationship between an SS/PBCH block and a random access preamble is configured, the terminal apparatus 1 randomly selects a ra-PreambleIndex from one or more random access preambles associated with the selected SS/PBCH block and the selected preamble group, and sets the selected ra-PreambleIndex to a preamble index.

Note that the terminal apparatus 1 may perform the contention based random access procedure in a case that a ra-PreambleIndex indicated by the message 0 is a pre-determined value (e.g., 0b000000). Note that in a case that a ra-PreambleIndex indicated by the message 0 is a pre-determined value (e.g., 0b000000), the terminal apparatus 1 may randomly select one of one or more random access preamble indices available in the contention based random access.

Note that in a case that a mask index is notified by the message 0, the terminal apparatus 1 transmits a random access preamble using an available PRACH occasion indicated by the notified mask index.

Note that in a case that an SSB index and a mask index are notified by the message 0, the terminal apparatus 1 transmits a random access preamble using an available PRACH occasion indicated by the notified SSB index and the notified mask index.

Note that the terminal apparatus 1 may determine a preamble index of a random access preamble used in the non-contention based random access based on a ra-PreambleIndex notified by a PDCCH (PDCCH order) and an SSB index notified by the PDCCH. In the RRC layer, an index (ra-PreambleIndex) corresponding to each of one or more reference signals may be associated with preamble index information notified in the message 0.

Note that in a case that one SS/PBCH block is selected and an association among PRACH occasions and the SS/PBCH block is configured, the terminal apparatus 1 may determine a next available PRACH occasion among the PRACH occasions associated with the selected SS/PBCH block. Note that in a case that one CSI-RS is selected and an association among PRACH occasions and the CSI-RS is configured, the terminal apparatus 1 may determine a next available PRACH occasion among the PRACH occasions associated with the selected CSI-RS. Note that in a case that an SSB index is notified by a PDCCH and an association among PRACH occasions and an SS/PBCH block is configured, the terminal apparatus 1 may determine a next available PRACH occasion among the PRACH occasions associated with the SS/PBCH block corresponding to the notified SSB index.

Note that in a case that an SSB index is notified by a PDCCH, the terminal apparatus 1 may select an SS/PBCH block corresponding to the notified SSB index.

Note that an available PRACH occasion may be identified based on the mask index information, the SSB index information, a resource configuration configured by an RRC parameter, and/or a selected reference signal (an SS/PBCH block or a CSI-RS). The resource configuration configured by the RRC parameter includes a resource configuration for each SS/PBCH block and/or a resource configuration for each CSI-RS.

The base station apparatus 3 may transmit a resource configuration for each SS/PBCH block and/or a resource configurations for each CSI-RS to the terminal apparatus 1 in an RRC message. The terminal apparatus 1 receives, from the base station apparatus 3, the resource configuration for each SS/PBCH block and/or the resource configuration for each CSI-RS in the RRC message. The base station apparatus 3 may transmit the mask index information and/or the SSB index information to the terminal apparatus 1 in the message 0. The terminal apparatus 1 acquires, from the base station apparatus 3, the mask index information and/or the SSB index information in the message 0. The terminal apparatus 1 may select a reference signal (an SS/PBCH block or a CSI-RS) based on a certain condition. The terminal apparatus 1 may identify a next available PRACH occasion based on the mask index information, the SSB index information, a resource configuration configured by an RRC parameter, and a selected reference signal (an SS/PBCH block or a CSI-RS). The MAC entity of the terminal apparatus 1 may indicate the physical layer to transmit a random access preamble using the selected PRACH occasion.

Note that in a case that the SRI configuration information is indicated by the message 0, the terminal apparatus 1 transmits one or more random access preambles using an antenna port and/or an uplink transmission beam corresponding to one or more SRS transmission resources indicated in the SRI configuration information.

### Message 2 (S803)

The base station apparatus 3 having received the message 1 generates a random access response including an uplink grant indicating transmission to the terminal apparatus 1, and transmits the generated random access response to the terminal apparatus 1 on a DL-SCH. The random access response may be referred to as a message 2 or Msg2. The base station apparatus 3 calculates a difference in transmission timing between the terminal apparatus 1 and the base station apparatus 3 from the received random access preamble, and causes the message 2 to include transmission timing adjustment information (Timing Advance Command) for adjusting such a difference. The base station apparatus 3 causes the message 2 to include a random access preamble identifier corresponding to the received random access preamble. The base station apparatus 3 transmits random access response identification information (Random Access-Radio Network Temporary Identity (RA-RNTI)) for indicating a random access response to the terminal apparatus 1 having transmitted the random access preamble on a downlink PCCH. The RA-RNTI is determined in accordance with frequency and time positional information on the physical random access channel on which the random access preamble has been transmitted. Here, the message 2 (downlink PSCH) may include the index of an uplink transmission beam used for transmission of the random access preamble. Information for determining the uplink transmission beam to be used for transmission of the message 3 may be transmitted using the downlink PCCH and/or the message 2 (downlink PSCH). Here, the information for determining the uplink transmission beam to be used for transmission of the message 3 may include information indicating a difference (adjustment, correction) from a precoding index used for transmission of the random access preamble.

By transmission and reception of the multiple messages as described above, the terminal apparatus 1 can synchronize with the base station apparatus 3, and perform uplink data transmission to the base station apparatus 3.

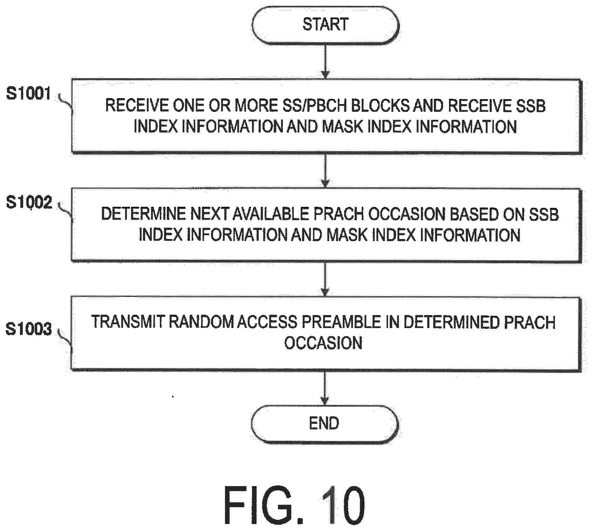

FIG. 10 is a flowchart illustrating an example of the processing of transmitting a non-contention based random access preamble in the terminal apparatus 1 according to the present embodiment.

The terminal apparatus 1 receives one or more SS/PBCH blocks from the base station apparatus 3, and receives the SSB index information and the mask index information (S1001). The terminal apparatus 1 determines a next available PRACH occasion based at least on the received SSB index information and the received mask index information (S1002). The terminal apparatus 1 transmits a random access preamble in the determined PRACH occasion (S1003).

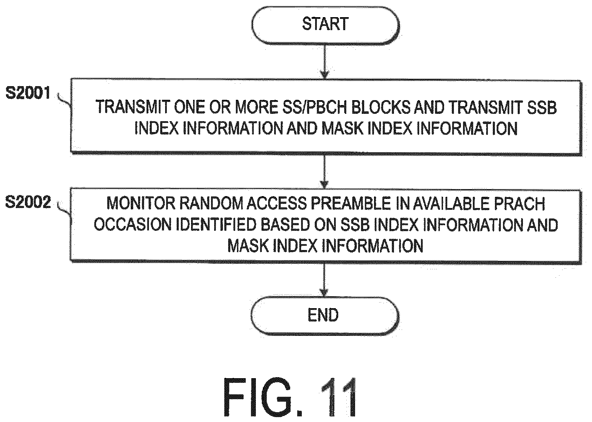

FIG. 11 is a flowchart illustrating an example of the processing of receiving a non-contention based random access preamble in the base station apparatus 3 according to the present embodiment.

The base station apparatus 3 transmits one or more SS/PBCH blocks, and transmits the SSB index information and the mask index information (S2001). The base station apparatus 3 monitors the random access preamble in a PRACH occasion identified based at least on the SSB index information and the mask index information (S2002).

Note that the terminal apparatus 1 may receive preamble allocation information identifying allocation of a randomly-selectable index (index available for the contention based random access) corresponding to each of one or more reference signals. Note that the terminal apparatus 1 may receive offset information identifying an offset value from a first index corresponding to each of one or more reference signals. The terminal apparatus 1 may identify a second index based on the index information, the preamble allocation information, the offset information, and/or the selected one reference signal. The preamble allocation information may be notified by an RRC message. The offset information may be notified by a PDCCH.

The preamble allocation information may include information identifying a PRACH occasion assigned to each of one or more reference signals (may be a reference signal index or a QCL configuration). The preamble allocation information may include the number (X) of selectable preambles in the contention based random access allocated to one reference signal (may be the reference signal index or the QCL configuration). Information of second information may include the total number (Y) of available preambles in the contention based random access and available preambles in the non-contention based random access, the preambles being allocated to one reference signal. The second information may include the number (Z) of reference signals assigned to one PRACH occasion. The second information may be notified in an RRC message. Note that Y may be the interval of the index of the preamble allocated at equal intervals to each reference signal. For example, in a case that Y is 10 and the first index is 9, the second index for each reference signal may be indicated as 9 + 10 × A. Note that A is a value dependent on a correspondence between a reference signal corresponding to the first index and a selected reference signal.

The offset information may include information identifying the interval of the index of the preamble allocated at equal intervals for each reference signal. The offset information may include information identifying an offset value from the first index corresponding to each reference signal.

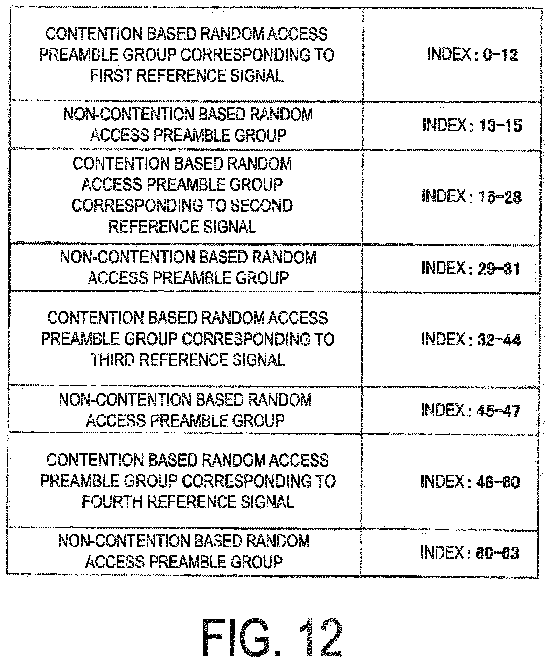

FIG. 12 illustrates an example of allocation of a preamble index according to the embodiment of the present invention. FIG. 12 shows the example where 64 types of random access preamble indices 0 to 63 available for a certain PRACH occasion are prepared and a preamble group for the contention based random access and a preamble group for the non-contention based random access are classified for four reference signals (e.g. SS/PBCH blocks). In FIG. 12, the indices 0 to 12 are for the contention based random access corresponding to a first reference signal, the indices 16 to 28 are for the contention based random access corresponding to a second reference signal, the indices 32 to 44 are for the contention based random access corresponding to a third reference signal, the indices 48 to 63 are for the contention based random access corresponding to a fourth reference signal, and the other indices are for the non-contention based random access. Note that in the figure, a non-contention based random access preamble group is allocated to between contention based random access preamble groups corresponding to each reference signal, but allocation is not necessarily made in this order. Note that in FIG. 12, particular reference signals are not allocated to four non-contention based random access preamble groups, but the non-contention based random preamble groups may be each allocated to four reference signals. Note that although FIG. 12 illustrates allocation of the preamble indices in one PRACH occasion, preamble indices in multiple PRACH occasions may be allocated to multiple reference signals.

The terminal apparatus 1 may be notified of, as the preamble allocation information, at least some of three pieces of information of X = 13, Y = 16, Z = 4 and identify allocation as in FIG. 12.

In a case that 14 is notified as the index information, the terminal apparatus 1 may identify that the index of the non-contention based random access preamble corresponding to the first reference signal is 14. Based on the information notified in the index information and the preamble allocation information, the terminal apparatus 1 may identify the index of the non-contention based random access preamble corresponding to the second reference signal, the index of the non-contention based random access preamble corresponding to the third reference signal, and/or the index of the non-contention based random access preamble corresponding to the fourth reference signal. For example, assuming that Y (= 16) is the interval of the index of the preamble allocated at equal intervals for each reference signal, the index of the non-contention based random access preamble corresponding to the second reference signal may be identified as 14 + 16 = 30, the index of the non-contention based random access preamble corresponding to the third reference signal may be identified as 14 + 16^{∗}2 = 46, and the index of the non-contention based random access preamble corresponding to the fourth reference signal may be identified as 14 + 16 ^{∗} 3 = 62. Note that 16 may be notified as the interval of the index of the preamble allocated at equal intervals for each reference signal by the offset information. Note that with the offset information, the offset of the second reference signal with respect to the first index, the offset of the third reference signal with respect to the first index, and/or the offset of the fourth reference signal with respect to the first index may be notified. Note that for the indices included in four non-contention based random access preamble groups in FIG. 12, non-contention based random access preambles corresponding to multiple reference signals may be allocated in an ascending order.

Configurations of apparatuses according to the present embodiment will be described below.

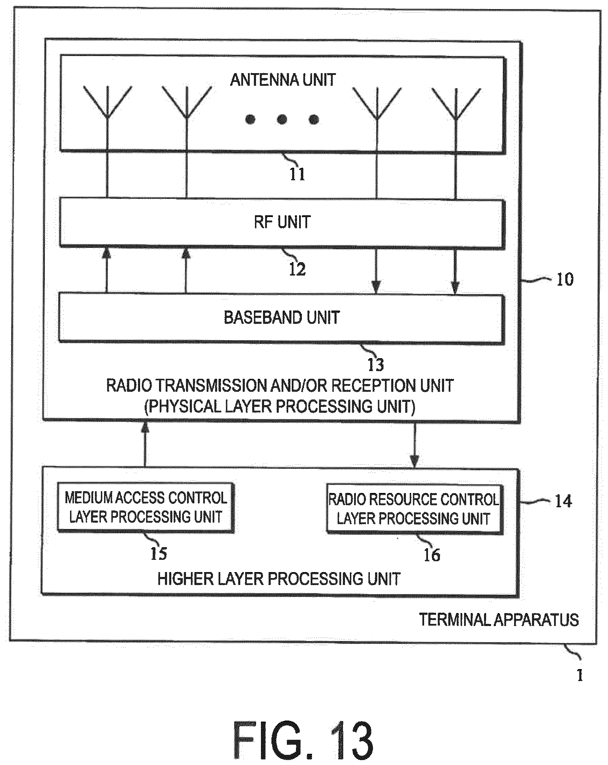

FIG. 13 is a schematic block diagram illustrating a configuration of the terminal apparatus 1 according to the present embodiment. As illustrated, the terminal apparatus 1 is configured to include a radio transmission and/or reception unit 10 and a higher layer processing unit 14. The radio transmission and/or reception unit 10 is configured to include an antenna unit 11, a Radio Frequency (RF) unit 12, and a baseband unit 13. The higher layer processing unit 14 is configured to include a medium access control layer processing unit 15 and a radio resource control layer processing unit 16. The radio transmission and/or reception unit 10 is also referred to as a transmitter, a receiver, a monitoring unit, or a physical layer processing unit. The higher layer processing unit 14 is also referred to as a measurement unit, a selection unit, or a controller.

The higher layer processing unit 14 outputs uplink data (may be referred to as a transport block) generated by user operation or the like to the radio transmission and/or reception unit 10. The higher layer processing unit 14 performs some or all types of the processing of the Medium Access Control (MAC) layer, the Packet Data Convergence Protocol (PDCP) layer, the Radio Link Control (RLC) layer, and the Radio Resource Control (RRC) layer. The higher layer processing unit 14 may have a function of selecting one reference signal from one or more reference signals, based on a measured value of each reference signal. The higher layer processing unit 14 may have a function of selecting a PRACH occasion associated with the selected one reference signal from one or more PRACH occasions. The higher layer processing unit 14 may have a function of identifying one index from one or more indices configured by a higher layer (e.g., an RRC layer) to set the index to the preamble index in a case that the bit information included in the information indicating the initiation of the random access procedure and received by the radio transmission and/or reception unit 10 is a pre-determined value. The higher layer processing unit 14 may have a function of identifying the index associated with the selected reference signal among one or more indices configured by the RRC and setting the index to the preamble index. The higher layer processing unit 14 may have a function of determining a next available PRACH occasion, based on the received information (e.g., the SSB index information and/or the mask index information). The higher layer processing unit 14 may have a function of selecting an SS/PBCH block, based on the received information (e.g., the SSB index information).

The medium access control layer processing unit 15 included in the higher layer processing unit 14 performs the processing of the medium access control layer (MAC layer). The medium access control layer processing unit 15 controls transmission of a scheduling request, based on various types of configuration information/parameters managed by the radio resource control layer processing unit 16.

The radio resource control layer processing unit 16 included in the higher layer processing unit 14 performs the processing of the RRC layer (radio resource control layer). The radio resource control layer processing unit 16 manages various types of configuration information/parameters of the terminal apparatus 1. The radio resource control layer processing unit 16 sets various types of configuration information/parameters based on a higher layer signaling received from the base station apparatus 3. Namely, the radio resource control layer processing unit 16 sets the various configuration information/parameters in accordance with the information for indicating the various configuration information/parameters received from the base station apparatus 3.

The radio transmission and/or reception unit 10 performs processing of the physical layer, such as modulation, demodulation, coding, decoding, and the like. The radio transmission and/or reception unit 10 demultiplexes, demodulates, and decodes a signal received from the base station apparatus 3, and outputs the information resulting from the decoding to the higher layer processing unit 14. The radio transmission and/or reception unit 10 generates a transmit signal by modulating and coding data, and performs transmission to the base station apparatus 3. The radio transmission and/or reception unit 10 may have a function of receiving one or more reference signals in a certain cell. The radio transmission and/or reception unit 10 may have a function of receiving information (e.g., the SSB index information and/or the mask index information) identifying one or more PRACH occasions. The radio transmission and/or reception unit 10 may have a function of receiving a signal including indication information indicating the initiation of the random access procedure. The radio transmission and/or reception unit 10 may have a function of receiving information for receiving information identifying a certain index. The radio transmission and/or reception unit 10 may have a function of receiving information specifying the index of the random access preamble. The radio transmission and/or reception unit 10 may have a function of transmitting a random access preamble in a PRACH occasion determined by the higher layer processing unit 14.

The RF unit 12 converts (down-converts) a signal received via the antenna unit 11 into a baseband signal by orthogonal demodulation and removes unnecessary frequency components. The RF unit 12 outputs a processed analog signal to the baseband unit.

The baseband unit 13 converts an analog signal input from the RF unit 12 into a digital signal. The baseband unit 13 removes a portion corresponding to a Cyclic Prefix (CP) from the converted digital signal, performs Fast Fourier Transform (FFT) for the signal from which the CP has been removed, and extracts a signal in the frequency domain.

The baseband unit 13 generates an OFDM symbol by performing Inverse Fast Fourier Transform (IFFT) of the data, adds the CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 by using a low-pass filter, up-converts the analog signal into a signal of a carrier frequency, and transmits the up-converted signal via the antenna unit 11. Furthermore, the RF unit 12 amplifies power. The RF unit 12 may include a function of determining transmit power of the uplink signal and/or the uplink channel transmitted in a serving cell. The RF unit 12 is also referred to as a transmit power control unit.

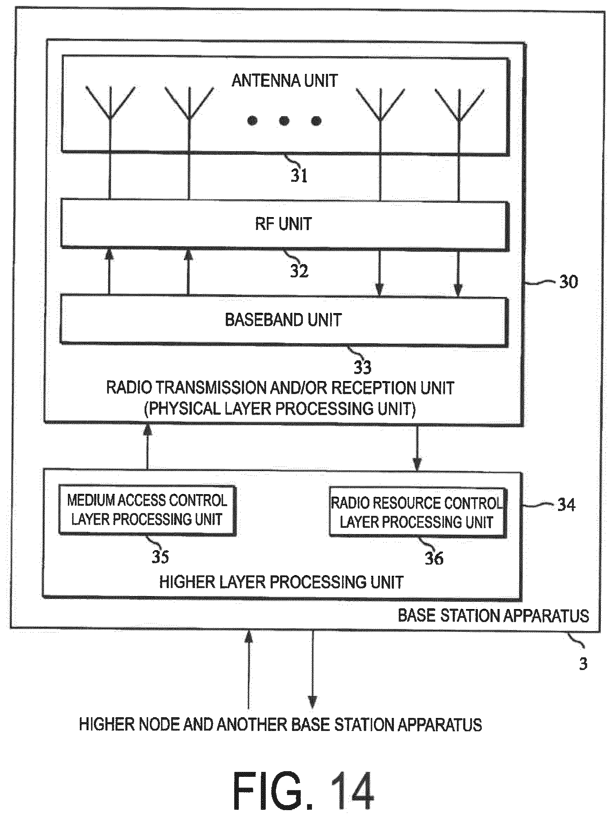

FIG. 14 is a schematic block diagram illustrating a configuration of the base station apparatus 3 according to the present embodiment. As illustrated, the base station apparatus 3 is configured to include a radio transmission and/or reception unit 30 and a higher layer processing unit 34. The radio transmission and/or reception unit 30 is configured to include an antenna unit 31, an RF unit 32, and a baseband unit 33. The higher layer processing unit 34 is configured to include a medium access control layer processing unit 35 and a radio resource control layer processing unit 36. The radio transmission and/or reception unit 30 is also referred to as a transmitter, a receiver, a monitoring unit, or a physical layer processing unit. A controller controlling operations of the units based on various conditions may be separately provided. The higher layer processing unit 34 is also referred to as a terminal control unit.

The higher layer processing unit 34 performs processing for some or all of the Medium Access Control (MAC) layer, the Packet Data Convergence Protocol (PDCP) layer, the Radio Link Control (RLC) layer, and the Radio Resource Control (RRC) layer. The higher layer processing unit 34 may have a function of identifying one reference signal from one or more reference signals, based on the random access preamble received by the radio transmission and/or reception unit 30. The higher layer processing unit 34 may identify the PRACH occasion for monitoring the random access preamble from at least the SSB index information and the mask index information.

The medium access control layer processing unit 35 included in the higher layer processing unit 34 performs the processing of the MAC layer. The medium access control layer processing unit 35 performs processing associated with a scheduling request, based on various types of configuration information/parameters managed by the radio resource control layer processing unit 36.

The radio resource control layer processing unit 36 included in the higher layer processing unit 34 performs the processing of the RRC layer. The radio resource control layer processing unit 36 generates, or acquires from a higher node, downlink data (transport block) allocated on a physical downlink shared channel, system information, an RRC message, a MAC Control Element (CE), and the like, and outputs the generated or acquired data to the radio transmission and/or reception unit 30. Furthermore, the radio resource control layer processing unit 36 manages various types of configuration information/parameters for each of the terminal apparatuses 1. The radio resource control layer processing unit 36 may set various types of configuration information/parameters for each of the terminal apparatuses 1 via higher layer signaling. That is, the radio resource control layer processing unit 36 transmits/reports information indicating various types of configuration information/parameters. The radio resource control layer processing unit 36 may transmit/broadcast information for identifying configurations of multiple reference signals in a certain cell.

In a case that an RRC message, a MAC CE, and/or a PDCCH are transmitted from the base station apparatus 3 to the terminal apparatus 1 and the terminal apparatus 1 performs the processing based on the reception thereof, the base station apparatus 3 performs the processing (control of the terminal apparatus 1 and the system) assuming that the terminal apparatus is performing such processing. In other words, the base station apparatus 3 transmits, to the terminal apparatus 1, an RRC message, a MAC CE, and/or a PDCCH causing the terminal apparatus to perform the processing based on such reception.

The radio transmission and/or reception unit 30 has a function of transmitting one or more reference signals. The radio transmission and/or reception unit 30 may have a function of receiving a signal including the beam failure recovery request transmitted from the terminal apparatus 1. The radio transmission and/or reception unit 30 may have a function of transmitting information (e.g., the SSB index information and/or the mask index information) identifying one or more PRACH occasions to the terminal apparatus 1. The radio transmission and/or reception unit 30 may have a function of transmitting information specifying a certain index. The radio transmission and/or reception unit 30 may have a function of transmitting information identifying the index of the random access preamble. The radio transmission and/or reception unit 30 may have a function of monitoring the random access preamble in the PRACH occasion identified by the higher layer processing unit 34. Some of other functions of the radio transmission and/or reception unit 30 are similar to those of the radio transmission and/or reception unit 10, and thus, description thereof is omitted. Note that in a case that the base station apparatus 3 is connected to one or more transmission and/or reception points 4, some or all of the functions of the radio transmission and/or reception unit 30 may be included in each transmission and/or reception point 4.

Further, the higher layer processing unit 34 transmits (transfers) or receives control messages or user data between the base station apparatuses 3 or between a higher network apparatus (MME, S-GW (Serving-GW)) and the base station apparatus 3. Although, in FIG. 18, other constituent elements of the base station apparatus 3, a transmission path of data (control information) between the constituent elements, and the like are omitted, it is apparent that the base station apparatus 3 is provided with multiple blocks, as constituent elements, including other functions necessary to operate as the base station apparatus 3. For example, a Radio Resource Management layer processing unit or an application layer processing unit exist in the higher layer processing unit 34. The higher layer processing unit 34 may also have the function of configuring multiple scheduling request resources corresponding to each of multiple reference signals transmitted from the radio transmission and/or reception unit 30.

Note that "units" in the drawing refer to elements to realize the functions and the procedures of the terminal apparatus 1 and the base station apparatus 3, which are also represented by the terms such as a section, a circuit, a constituting apparatus, a device, a unit, and the like.

Each of the units having the reference signs 10 to 16 included in the terminal apparatus 1 may be configured as a circuit. Each of the units having the reference signs 30 to 36 included in the base station apparatus 3 may be configured as a circuit.
(1) More specifically, a terminal apparatus 1 in a first aspect of the present invention includes a receiver 10 configured to receive one or more first blocks (may be SS/PBCH blocks) including a synchronization signal and receive first index information (may be SSB index information) and second index information (may be mask index information) and a transmitter 10 configured to transmit a random access preamble by using a physical random access channel occasion (PRACH occasion) that is available and identified based at least on the first index information and the second index information, the first index information indicating an index for identifying one first block of the one or more first blocks, at least one bit sequence of bit sequences indicatable by the second index information indicating a physical random access channel occasion index, the physical random access channel occasion index (PRACH occasion index) indicating a physical random access channel occasion available for transmission of the random access preamble among a plurality of the physical random access channel occasions associated with the one first block in an association period, and the association period being identified based on a physical random access channel configuration period (PRACH configuration period) indicated by higher layer signaling and the number of the one or more first blocks identified by higher layer signaling.
(2) In the first aspect of the present invention, the first index information and the second index information may be received via a physical downlink control channel.
(3) A base station apparatus 3 in a second aspect of the present invention includes a transmitter 30 configured to transmit one or more first blocks (may be SS/PBCH blocks) including a synchronization signal and transmit first index information (may be SSB index information) and second index information (may be mask index information) and a receiver 30 configured to monitor a random access preamble by using a physical random access channel occasion (PRACH occasion) that is available and identified based at least on the first index information and the second index information, the first index information indicating an index for identifying one first block of the one or more first blocks, at least one bit sequence of bit sequences indicatable by the second index information indicating a physical random access channel occasion index (PRACH occasion index), the physical random access channel occasion index indicating a physical random access channel occasion available for transmission of the random access preamble among a plurality of the physical random access channel occasions associated with the one first block in an association period, and the association period being identified based on a physical random access channel configuration period indicated by higher layer signaling and the number of the one or more first blocks identified by higher layer signaling.
(4) In the second aspect of the present invention, the first index information and the second index information may be transmitted via a physical downlink control channel.

A program running on an apparatus according to an aspect of the present invention may serve as a program that controls a Central Processing Unit (CPU) and the like to cause a computer to function in such a manner as to realize the functions of the embodiment according to the aspect of the present invention. Programs or the information handled by the programs are temporarily stored in a volatile memory such as a Random Access Memory (RAM), a non-volatile memory such as a flash memory, a Hard Disk Drive (HDD), or any other storage device system.

Note that a program for realizing the functions of the embodiment according to an aspect of the present invention may be recorded in a computer-readable recording medium. This configuration may be realized by causing a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. Furthermore, in a case that with advances in semiconductor technology, a circuit integration technology appears that replaces the present integrated circuits, it is also possible to use a new integrated circuit based on the technology according to one or more aspects of the present invention.

Note that, in the embodiment according to an aspect of the present invention, the example where the present invention is applied to the communication system including the base station apparatus and the terminal apparatus has been described, but the present invention can also be applied to a system performing communication between terminals, such as Device to Device (D2D).

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### INDUSTRIAL APPLICABILITY

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### REFERENCE SIGNS LIST

- 1 (1A, IB): Terminal apparatus
- 3: Base station apparatus
- 4: Transmission reception point (TRP)
- 10: Radio transmission and/or reception unit
- 11: Antenna unit
- 12: RF unit
- 13: Baseband unit
- 14: Higher layer processing unit
- 15: Medium access control layer processing unit
- 16: Radio resource control layer processing unit
- 30: Radio transmission and/or reception unit
- 31: Antenna unit
- 32: RF unit
- 33: Baseband unit
- 34: Higher layer processing unit
- 35: Medium access control layer processing unit
- 36: Radio resource control layer processing unit
- 50: Transceiver unit (TXRU)
- 51: Phase shifter
- 52: Antenna element

## Claims

1. A terminal apparatus comprising:
a receiver configured to receive one or more first blocks including a synchronization signal and receive first index information and second index information; and
a transmitter configured to transmit a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.

2. The terminal apparatus according to claim 1, wherein
the first index information and the second index information are received via a physical downlink control channel.

3. A base station apparatus comprising:
a transmitter configured to transmit one or more first blocks including a synchronization signal and transmit first index information and second index information;_ and
a receiver configured to monitor a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.

4. The base station apparatus according to claim 3, wherein the first index information and the second index information are transmitted via a physical downlink control channel.

5. A communication method for a terminal apparatus, the communication method comprising:
receiving one or more first blocks including a synchronization signal and receiving first index information and second index information; and
transmitting a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.

6. A communication method for a base station apparatus, the communication method comprising:
transmitting one or more first blocks including a synchronization signal and transmitting first index information and second index information; and
monitoring a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.

7. An integrated circuit mounted on a terminal apparatus and causing the terminal apparatus to perform:
receiving one or more first blocks including a synchronization signal and receiving first index information and second index information; and
transmitting a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.

8. An integrated circuit mounted on a base station apparatus and causing the base station apparatus to perform:
transmitting one or more first blocks including a synchronization signal and transmitting first index information and second index information; and
monitoring a random access preamble by using a physical random access channel occasion that is available and identified based at least on the first index information and the second index information, wherein
the first index information indicates an index for identifying one first block of the one or more first blocks,
at least one bit sequence of bit sequences indicatable by the second index information indicates a physical random access channel occasion index,
the physical random access channel occasion index indicates a physical random access channel occasion available for transmission of the random access preamble among a plurality of the physical random access channel occasions associated with the one first block in an association period, and
the association period is identified based on a physical random access channel configuration period indicated by higher layer signaling and the number of the one or more first blocks identified by higher layer signaling.
